# EUROPÄISCHE PATENTSCHRIFT

(11) **EP 2 962 888 B1**
(45) Veröffentlichungstag und Bekanntmachung des Hinweises auf die Patenterteilung: **10.04.2019**
(21) Anmeldenummer: 15164228.7
(22) Anmeldetag: 20.04.2015
(51) Int. Cl.: B60K 35/00, B60K 37/06, B60K 37/02, G01C 21/36, G01D 7/00, G01D 7/02, G01D 7/08

(54) **VERFAHREN UND VORRICHTUNG ZUM ANZEIGEN EINES KRITISCHEN WERTEBEREICHS EINES ERSTEN FAHRZEUGSPEZIFISCHEN PARAMETERS IN EINEM FAHRZEUG**
METHOD AND DEVICE FOR DISPLAYING A CRITICAL VALUES AREA OF A FIRST VEHICLE-SPECIFIC PARAMETER IN A VEHICLE
PROCÉDÉ ET DISPOSITIF D'AFFICHAGE D'UNE PLAGE DE VALEURS CRITIQUES D'UN PREMIER PARAMÈTRE SPÉCIFIQUE AU VÉHICULE DANS UN VÉHICULE

(30) Priorität: 24.06.2014 DE 102014212093
(43) Veröffentlichungstag der Anmeldung: 06.01.2016
(73) Patentinhaber: Volkswagen Aktiengesellschaft, 38440 Wolfsburg (DE)
(72) Erfinder: Hofmann, Gustav, 38116 Braunschweig (DE); Bachorski, Tomasz, 38176 Wendeburg (DE); Jun, Mi-Ran, 10965 Berlin (DE)

(56) Entgegenhaltungen:
- WO-A1-03/057522
- DE-A1-102005 017 666
- DE-A1-102008 032 062
- DE-A1-102011 116 314
- DE-A1-102012 021 735
- FR-A1- 2 898 551

## Beschreibung

Die Erfindung betrifft ein Verfahren und eine Vorrichtung zum Anzeigen eines kritischen Wertebereichs eines ersten fahrzeugspezifischen Parameters in einem Fahrzeug.

Die Anzahl von Informationen, die einem Fahrzeugführer aufgrund der steigenden Anzahl von Komforteinrichtungen angezeigt werden, steigt ständig. Zu den Komforteinrichtungen, die in modernen Fahrzeugen eingesetzt werden zählen Navigationseinrichtungen, Telekommunikationseinrichtungen, Fahrerassistenzsystemen und Warnhinweise zu einer Vielzahl von Einrichtungen des Fahrzeugs und zu Umgebungsbedingungen. In vielen Fahrzeugen werden deshalb so genannte Multifunktions-Bedien- und Anzeigeeinrichtungen eingesetzt. Herkömmlicherweise ist das Display solcher Multifunktions-Bedien- und Anzeigeeinrichtungen in der Mittelkonsole angeordnet. Des Weiteren weisen solche Fahrzeuge ein so genanntes Kombinationsinstrument nahe des primären Sichtfeldes des Fahrzeugführers auf, welches dynamische Informationen und Überwachungsinformationen anzeigt, auf welche der Fahrzeugführer ggfs. unmittelbar reagieren soll. Neuerdings weisen die Kombinationsinstrumente neben herkömmlichen mechanischen Rundinstrumenten auch frei programmierbare Displays auf, welche die mechanischen Rundinstrumente ersetzen und zusätzlich Informationen einer Navigationseinrichtung, einer Telekommunikationseinrichtung und insbesondere der Fahrerassistenzsysteme darstellen. Die Darstellung umfassender Informationen im Kombinationsinstrument des Fahrzeugs hat den Vorteil, dass der Fahrzeugführer zur Wahrnehmung der dargestellten Informationen seinen Blick nur geringfügig vom Fahrgeschehen abwenden muss.

Wenn zu umfassende Informationen im Kombinationsinstrument dargestellt werden, ergibt sich allerdings das Problem, dass der Fahrzeugführer die gewünschte Information nicht mehr schnell und intuitiv erfassen kann und von der Informationsfülle auf dem Display des Kombinationsinstruments vom Fahren abgelenkt wird. Aus diesem Grund wird an neuen Konzepten gearbeitet, wie Informationen mittels Anzeigeeinrichtungen in einem Fahrzeug, insbesondere mittels des Kombinationsinstruments, in der Nähe des Blickfeldes des Fahrzeugführers dargestellt werden können. Bei der Informationsdarstellung ist es besonders wichtig, dass der Fahrzeugführer die Informationen so schnell und intuitiv wie möglich aufnehmen kann. Gleichzeitig sollten solche Informationen angezeigt werden, die für den Fahrzeugführer in der jeweiligen Fahrsituation besonders relevant sind. Auf diese Weise wird durch die Anzeige- und Bedienkonzepte ein Beitrag zum sicheren Führen des Fahrzeugs geleistet.

Aus der DE 43 07 367 A1 ist eine Anzeigeeinrichtung für ein Fahrzeug bekannt, die einen Bildschirm aufweist, der einen Bereich umfasst, in dem eine über Bedienelemente aufgerufene, frei wählbare Zustandsinformation in unterschiedlicher, vom Bediener wählbarer Form anzeigbar ist.

Aus der DE 199 02 136 B4 ist ein Kombinationsinstrument für ein Fahrzeug bekannt, das zwei Anzeigetafeln aufweist, wobei die zweite Anzeigetafel eine niedrigere Luminanz als die erste Anzeigetafel besitzt und die beiden Anzeigetafeln miteinander kombiniert sind. Das Kombinationsinstrument weist einen Verdunklungsfilter auf, dessen Transparenz in Wellenlängenbereichen hoch gewählt ist, die einem Wellenlängenbereich des von der zweiten Anzeigetafel emittierten Lichts und einem Wellenlängenbereich von Licht entspricht, das eine Farbe besitzt, die komplementär zu einer Farbe des Lichts ist, das von der zweiten Anzeigetafel emittiert wird.

Aus der EP 1 582 393 A2 ist ein Fahrerinformationssystem bekannt, welches über eine Bedieneinheit mit einer Mehrzahl von Funktionselementen zur Auswahl von Hauptfunktionen, einer Mehrzahl von Steuerungselementen zur Auswahl von Funktionen einer Hauptfunktion, einem Auswahlelement zur Auswahl von Unterfunktionen der Funktionen und einem Returnelement für eine Rückkehr zu einer übergeordneten Ebene, verfügt. Weiterhin weist das Fahrerinformationssystem eine Anzeigeeinheit zur graphischen Darstellung von wenigstens bedieneinheitsbezogenen Informationen auf.

Weitere Kombinationsinstrumente für Fahrzeuge sind z. B. aus der EP 1 190 886 A2, der EP 1 559 995 A1 und der WO 03/057522 A1 bekannt.

Die DE 10 2012 021735 A1, welche die Oberbegriffe der unabhängigen Ansprüche offenbart, beschreibt ein Verfahren und eine Vorrichtung zur Wiedergabe von den Energievorrat eines Energiespeichers repräsentierenden Messwerten. Dabei kann auf einer Anzeigefläche eine Tankstandanzeige dargestellt werden, die durch ein grafisches Tanksymbol gekennzeichnet ist. Der aktuelle Tankstand wird mit Hilfe einer als Zeiger ausgeführten Ablesemarke an einer Skala wiedergegeben. Es wird der aktuelle Tankstand ermittelt und mit einem vordefinierten Schwellenwert verglichen. Wird festgestellt, dass der aktuelle Tankstand den Schwellenwert erreicht hat oder ihn unterschreitet, wird eine mit dem Tankstand mögliche Restreichweite berechnet und angezeigt. Wird der Schwellenwert erreicht, ist die Skala nicht mehr vollständig zu sehen, sondern nur noch von der Anzeige leer "0" bis zur Anzeige halbvoll "1/". Zudem wird ein Reservebereich als markierter Bereich angezeigt, welcher vom Schwellenwert bis zur Anzeige leer "0" reicht.

Es ist die Aufgabe der vorliegenden Erfindung, ein Verfahren und eine Vorrichtung der eingangs genannten Art in einem Fahrzeug bereitzustellen, mit denen ein Betrachter im Fahrzeug eine Veränderung eines fahrzeugspezifischen Parameters in einem Fahrzeug schnell und intuitiv erfassen kann.

Erfindungsgemäß wird diese Aufgabe durch ein Verfahren mit den Merkmalen des Anspruchs 1 sowie einer Vorrichtung mit den Merkmalen des Anspruchs 10 gelöst. Vorteilhafte Ausgestaltungen und Weiterbildungen sind Gegenstände der abhängigen Ansprüche.

Bei dem erfindungsgemäßen Verfahren wird der momentane Wert des ersten Parameters ermittelt. In einem Bereich auf einer Anzeigefläche werden zumindest eine Skala, welche mögliche Werte des ersten Parameters anzeigt und welche in mehrere Skalenteile unterteilt ist, und ein graphisches Element, welches den momentanen Wert des ersten Parameters auf der Skala anzeigt, angezeigt. Wenn der erste Parameter einen vordefinierten kritischen Wert erreicht hat, wird der Bereich der Anzeigefläche derart angesteuert, dass zumindest ein Skalenteil der Skala so verändert wird, dass das Skalenteil zumindest teilweise als kritischer Wertebereich des ersten Parameters markiert angezeigt wird.

Als kritischer Wertebereich wird insbesondere ein Wertebereich verstanden, der dann erreicht wird, wenn der Wert des Parameters einen Grenzwert über- bzw. unterschritten hat. Dieser Grenzwert wird als kritischer Wert bezeichnet. Hat der Wert des Parameters den kritischen Wertebereich erreicht, ist insbesondere ein Eingreifen des Nutzers zwar nicht unbedingt sofort, aber in absehbarer Zeit, notwendig.

Die Skala wird insbesondere durch verschiedene Skalenstriche in die Skalenteile unterteilt. Ein Skalenteil erstreckt sich damit von einem Skalenstrich zum nächsten Skalenstrich. Weist die Skala beispielsweise neun Skalenstriche auf, ist sie in acht Skalenteile eingeteilt.

Bei dem erfindungsgemäßen Verfahren wird, wenn der erste Parameter den vordefinierten kritischen Wert erreicht hat, ein Wert eines zumindest teilweise von dem ersten Parameter abhängigen zweiten Parameters ermittelt und angezeigt. Ferner werden, wenn der erste Parameter den vordefinierten kritischen Wert erreicht hat, die Skalenteile, die nicht den kritischen Wertebereich bilden, nicht mehr angezeigt, wobei an deren Stelle neben dem markiert dargestellten Skalenteil eine freie Fläche dargestellt wird, in welcher der Wert des zweiten Parameters angezeigt. Dadurch kann vorteilhafterweise ein zweiter Parameter angezeigt werden, der mit dem ersten Parameter zusammenhängt. Dieser Wert befindet sich dann zwangsläufig auch in einem kritischen Wertebereich. Es kann also vorteilhafterweise ein Bereich auf der Anzeigefläche zur Anzeige von zwei kritischen Werten genutzt werden. Der Wert des zweiten Parameters wird in diesem Fall insbesondere nicht angezeigt, wenn der erste Parameter den vordefinierten kritischen Wert noch nicht erreicht hat.

Der erste Parameter kann eine in einem Energiespeicher des Fahrzeugs gespeicherte Energiemenge und der zweite Parameter die Restreichweite des Fahrzeugs sein. Dabei ist zu beachten, dass die Restreichweite des Fahrzeugs nicht ausschließlich von der noch vorhandenen Energiemenge im Fahrzeug abhängig ist. Insbesondere haben auch die momentane Fahrweise und die momentanen Einstellungen einer Klimaanlage oder sonstiger Fahrzeugfunktionen Auswirkungen auf die Restreichweite. Es kann somit vorkommen, dass zwar der kritische Wertebereich immer dann erreicht wird, wenn ein bestimmter Skalenteil erreicht wird. Die Restreichweite, die dann angezeigt wird, kann jedoch in Abhängigkeit von der Fahrweise und den Einstellungen der Fahrzeugfunktionen variieren.

Zudem kann die Art der Energie entweder herkömmlich über einen Kraftstoff, wie Benzin oder Diesel, geliefert werden. Alternativ oder zusätzlich kann die Energie auch in einer Batterie gespeichert sein, so dass das Fahrzeug dann zumindest teilweise durch elektrische Energie angetrieben wird. Ist das Fahrzeug ein Hybridfahrzeug, weist das Fahrzeug beide Arten von Energie auf.

Es kann auch in Abhängigkeit von gespeicherten Daten für den Energieverbrauch in dem Bereich eine Skala für weitere Betriebsparameter des Fahrzeugs, beispielsweise die Restreichweite, die Entfernung zur nächsten Tankstelle und/oder die Entfernung von einem Ziel der Zielführungseinrichtung angezeigt werden. Die entsprechenden Werte für die Restreichweite, die Entfernung zur nächsten Tankstelle und die Entfernung von dem Ziel kann auf Basis von gespeicherten Daten sowie auf Basis von Daten einer Zielführungseinrichtung berechnet und entsprechende Graphikdaten zur Anzeige in dem Bereich erzeugt werden.

Zudem können auf einer Entfernungsskala, insbesondere einer einzigen Entfernungsskala, die Restreichweite, die Entfernung zur nächsten Tankstelle und die Entfernung von dem Ziel der Zielführungseinrichtung in dem Bereich angezeigt werden. Beispielsweise können diese Werte mittels mehrerer Zeiger auf der Entfernungsskala angezeigt werden. Vorteilhafterweise erhält der Fahrer somit in einer integrierten Anzeige die in dieser Fahrsituation relevanten Informationen dargestellt.

Insbesondere wird zum Anzeigen des kritischen Wertebereichs der vordefinierte kritische Wert unterschritten. Dies ist insbesondere dann der Fall, wenn der erste Parameter eine in einem Energiespeicher des Fahrzeugs gespeicherte Energiemenge ist. Der kritische Wertebereich wird dann erreicht, wenn beispielsweise der Energiespeicher nur noch zu einem Achtel gefüllt ist. Dadurch wird dem Nutzer angezeigt, dass er den Energiespeicher des Fahrzeugs wieder auffüllen sollte.

Der kritische Wertebereich kann durch ein längliches graphisches Objekt markiert dargestellt werden, welches sich zumindest teilweise über das Skalenteil erstreckt. Hierdurch wird vorteilhafterweise eine für den Nutzer eindeutige und intuitive Darstellungsweise des kritischen Wertebereichs bereitgestellt.

Hat der erste Parameter den vordefinierten kritischen Wert erreicht, kann eine visuell wahrnehmbare Eigenschaft des graphischen Elements verändert werden. Ist das graphische Element beispielsweise ein Zeiger, dessen Spitze auf den ermittelten Wert des Parameters zeigt, kann eine Veränderung einer visuell wahrnehmbaren Eigenschaft des Zeigers mehr Aufmerksamkeit darauf lenken, dass der Parameter den kritischen Wertebereich erreicht hat.

Wird innerhalb des kritischen Wertebereichs ein weiterer vordefinierter kritischer Wert erreicht, kann eine visuell wahrnehmbare Eigenschaft der Markierung verändert werden. Dies kann insbesondere dann der Fall sein, wenn ein Eingreifen seitens des Nutzers dringend notwendig wird. Nähert sich beispielsweise die Menge im Energiespeicher der Null an, wird es dringend notwendig, den Energiespeicher des Fahrzeugs aufzufüllen.

Die wahrnehmbare Eigenschaft der Markierung und/oder des graphischen Elements kann dabei die Farbe, die Länge und/oder eine zeitliche Veränderung der Leuchtstärke der Markierung und/oder des graphischen Elements umfassen. Wird die Leuchtstärke zeitlich verändert, fängt die Markierung und/oder das graphische Element zu pulsieren an. Dies wiederum bedeutet, dass die Markierung und/oder das graphische Element einmal nicht zu sehen ist und dann wieder zu sehen ist. Dies führt zu einer erhöhten Wahrnehmbarkeit der Markierung und/oder des graphischen Elements. Weisen beispielsweise die Markierung und das graphische Element die gleiche Farbe auf, kann der Wert des Parameters im kritischen Wertebereich nicht mehr klar abgelesen werden. Es kann daher die Farbe des graphischen Elements verändert werden.

Weiterhin kann, wenn der Wert des Parameters den vordefinierten kritischen Wert erreicht hat, auf der Anzeigefläche in einem weiteren Bereich eine Fläche angezeigt werden, deren Leuchtstärke zeitlich verändert wird. Der weitere Bereich kann dabei beabstandet zu dem Bereich angeordnet sein, so dass der Nutzer auch dann darauf aufmerksam gemacht wird, dass der Wert des Parameters einen kritischen Wertebereich erreicht hat, wenn sein Blick gerade von der Energievorratsanzeige abgewendet ist. Dadurch kann der Bereich, in dem der Fahrer wahrnimmt, dass der Parameter den kritischen Wertebereich erreicht hat, vergrößert werden.

Zudem kann in einem ersten Anzeigemodus der Anzeigeeinrichtung die Anzeigefläche derart angesteuert werden, dass ein Anzeigeelement mit einer ersten Begrenzung und einer innerhalb der Begrenzung liegenden Fläche erzeugt wird. Dabei wird die Fläche in zumindest eine erste und eine zweite Teilfläche unterteilt und die erste Teilfläche umfasst eine Skala, mittels welcher eine Zustandsgröße des Fahrzeugs angezeigt wird. Der momentane Wert der Zustandsgröße wird im ersten Anzeigemodus über ein graphisches Element angezeigt, welches sich von der zweiten Teilfläche in die erste Teilfläche zu der Skala hin erstreckt. Weiterhin wird ein dritter Parameter erfasst. Zudem wird eine Bedienaktion erfasst, durch welche die Anzeigeeinrichtung von dem ersten Anzeigemodus in einen zweiten Anzeigemodus gebracht wird. In dem zweiten Anzeigemodus wird das Anzeigeelement derart erzeugt, dass die zweite Teilfläche visuell von der ersten Teilfläche durch eine zweite Begrenzung abgegrenzt wird und dass die zweite Teilfläche in eine Mittelfläche und eine Innenfläche unterteilt wird, wobei zwischen der Mittelfläche und der Innenfläche eine dritte Begrenzung gebildet ist und wobei die Mittelfläche zwischen der ersten Teilfläche und der Innenfläche angeordnet ist. Zudem wird das Anzeigeelement in dem zweiten Anzeigemodus derart erzeugt, dass sich das graphische Element von der zweiten Begrenzung zu der Skala hin erstreckt, so dass das graphische Element nur noch in der ersten Teilfläche angezeigt wird, und dass der Wert des dritten Parameters in der Mittelfläche und der Innenfläche auf unterschiedlichen Darstellungsarten angezeigt wird.

Bereits im ersten Anzeigemodus kann die zweite Teilfläche in die Mittelfläche und die Innenfläche unterteilt werden. Zwischen der Mittelfläche und der Innenfläche ist die dritte Begrenzung gebildet. Zudem ist das graphische Element ein Zeigerelement, das einen Zeiger und eine Zeigerbasis umfasst, wobei die Zeigerbasis im ersten Anzeigemodus an der dritten Begrenzung angeordnet ist und im zweiten Anzeigemodus an der zweiten Begrenzung angeordnet ist. Dadurch wird verhindert, dass das Zeigerelement im zweiten Anzeigemodus durch eine Fläche der zweiten Teilfläche verläuft und dabei die Anzeige des Parameters stört.

Insbesondere kann die erste Begrenzung kreisförmig sein, so dass das Anzeigeelement im ersten Anzeigemodus eine Kreisscheibe darstellt. Auch die zweite und dritte Begrenzung können kreisförmig sein, so dass im zweiten Anzeigemodus die erste Teilfläche mit der Skala einen Außenring bildet, die Mittelfläche einen Mittelring bildet und die Innenfläche eine innere Kreisscheibe bildet. Das Anzeigeelement erhält dadurch im zweiten Anzeigemodus ein besonderes Design, durch welches sich moderne Anzeigen von Parametern verwirklichen lassen. Durch die kreisförmige Ausgestaltung des Anzeigeelements kann insbesondere ein mechanisches Rundinstrument, welches in der Regel in einem Kombinationsinstrument eines Fahrzeugs angezeigt wird, durch dieses ersetzt werden. Solche mechanischen Rundinstrumente können somit insbesondere durch eine Volldigitalanzeige mittels eines Displays ersetzt werden. Dadurch können variable Ausgestaltungen für Nutzer, die großen Wert auf ein modernes Design von Kombinationsinstrumenten legen, bereitgestellt werden.

Bei einem Übergang von dem ersten in den zweiten Anzeigemodus kann die Innenfläche vergrößert werden, die Mittelfläche verkleinert werden, die Zeigerbasis von der dritten Begrenzung zu der zweiten Begrenzung verschoben werden und gleichzeitig die Länge des Zeigers von seiner Ausgangslänge auf eine Endlänge verkürzt werden. Der Übergang von dem ersten in den zweiten Anzeigemodus wird demnach durch eine fließende Animation dargestellt, deren Endpunkt die Anzeige des zweiten Anzeigemodus ist. Wird von dem zweiten Anzeigemodus in den ersten Anzeigemodus zurückgeschaltet, kann die Animation umgekehrt ablaufen. Durch eine solche Animation wird dem Nutzer vorteilhafterweise veranschaulicht, dass er gerade den Anzeigemodus wechselt. Dadurch wird er eher auf einen unbeabsichtigten Wechsel des Anzeigemodus aufmerksam. Zudem kann dem Nutzer eine visuell ansprechender Übergang von den ersten in den zweiten Anzeigemodus bereitgestellt werden.

Der Bereich zur Anzeige des kritischen Wertebereichs kann dann in ein solches Anzeigeelement integriert werden. Der Bereich würde sich dann jedoch bei einem Übergang von den ersten in den zweiten Anzeigemodus nicht ändern, sondern nur dann, wenn der kritische Wertebereich erreicht wird.

Der Bereich kann beispielsweise in einem solchen Anzeigeelement angezeigt werden, welches eine Anzeige für eine Geschwindigkeit und/oder eine Motordrehzahl des Fahrzeugs darstellt.

Zudem können in einem weiteren Bereich auf der Anzeigefläche mehrere graphische Elemente beabstandet voneinander angezeigt werden. Es wird ein Wert eines vierten Parameters erfasst. Die graphischen Elemente werden in Abhängigkeit von dem Wert des vierten Parameters so in eine Richtung auf der Anzeigefläche bewegt, dass ein graphisches Element aus dem Bereich verschwindet, wenn es eine erste Begrenzung des Bereichs erreicht hat, und bei einer der ersten Begrenzung gegenüberliegenden zweiten Begrenzung ein neues graphisches Element angezeigt wird.

Der Abstand zwischen jeweils zwei benachbarten graphischen Elementen kann in Bewegungsrichtung der graphischen Elemente größer werden. Dadurch lässt sich der vierte Parameter auf perspektivische Art und Weise darstellen. Zudem wird bei dem Nutzer der Eindruck erweckt, als würde in dem weiteren Bereich die Fahrbahn dargestellt werden.

Die graphischen Elemente können insbesondere parallel verlaufende horizontale Linien sein, wobei die Bewegungsrichtung der horizontalen Linien senkrecht zu den horizontalen Linien ist. Dies bedeutet, dass sich die horizontalen Linien entweder nach oben oder nach unten auf der Anzeigefläche bewegen. Insbesondere wenn die Linien auf der Anzeigefläche nach unten bewegt werden, erhält der Fahrer den Eindruck, als würde er die Linien überfahren.

Der vierte Parameter kann dabei die Fahrzeuggeschwindigkeit sein. Dies hat den Vorteil, dass die Fahrzeuggeschwindigkeit als sicherheitsrelevanter Parameter schnell und intuitiv eingeschätzt werden kann. Neben einer numerischen Anzeige kann dem Nutzer über diese Anzeige ein Gefühl für die gefahrene Geschwindigkeit gegeben werden. Dies ist insbesondere bei einem Wechsel von einer Straße, auf der mit hoher Geschwindigkeit gefahren wird, beispielsweise einer Autobahn, auf eine Straße, auf der mit niedrigerer Geschwindigkeit gefahren wird, beispielsweise einer Landstraße, von Vorteil.

Des Weiteren betrifft die Erfindung eine Vorrichtung zum Anzeigen eines kritischen Wertebereichs eines ersten fahrzeugspezifischen Parameters in einem Fahrzeug. Die Vorrichtung umfasst eine Anzeigeeinrichtung mit einer Anzeigefläche, eine Erfassungseinheit, mittels welcher der erste Parameter erfassbar ist und eine Steuereinrichtung. Mittels der Steuereinrichtung ist die Anzeigefläche derart ansteuerbar, dass in einem Bereich auf der Anzeigefläche zumindest eine Skala, welche mögliche Werte des ersten Parameters anzeigt und welche in mehrere Skalenteile unterteilbar ist, und ein graphisches Element, welches den momentanen Wert des ersten Parameters auf der Skala anzeigt, anzeigbar sind. Wenn der erste Parameter einen vordefinierten kritischen Wert erreicht hat, ist zumindest ein Skalenteil der Skala so veränderbar, dass das Skalenteil zumindest teilweise als kritischer Wertebereich des ersten Parameters markiert angezeigt wird. Die erfindungsgemäße Vorrichtung ist insbesondere zum Ausführen des Verfahrens geeignet und weist daher alle Vorteile dieses Verfahrens auf. Weiterhin ist die erfindungsgemäße Vorrichtung so ausgestaltet, dass sie die vorstehend beschriebenen Verfahrensschritte teilweise oder vollständig ausführen kann.

Erfindungsgemäß umfasst die Vorrichtung eine Ermittlungseinheit, die einen Wert eines von dem ersten Parameter zumindest teilweise abhängigen zweiten Parameters berechnet, wobei der berechnete Wert des zweiten Parameters auf der Anzeigefläche anzeigbar ist. Dabei werden, wenn der erste Parameter den vordefinierten kritischen Wert erreicht hat, die Skalenteile, die nicht den kritischen Wertebereich bilden, nicht mehr angezeigt, wobei an deren Stelle neben dem markiert dargestellten Skalenteil eine freie Fläche dargestellt wird, in welcher der Wert des zweiten Parameters anzeigbar ist.

Weiterhin ist die Anzeigefläche in zumindest drei Anzeigebereiche aufteilbar, wobei in jeweils einem ersten und einem zweiten Anzeigebereich ein Anzeigeelement mit dem Bereich anzeigbar ist. Das Anzeigeelement kann dabei dem vorherig beschriebenen Anzeigeelement mit integrierter Energievorratsanzeige entsprechen. In einem dritten Anzeigebereich können die bewegten graphischen Elemente angezeigt werden. Dieser dritte Anzeigebereich kann sich insbesondere zwischen dem ersten und dem zweiten Anzeigebereich angeordnet sein.

Ferner betrifft die Erfindung ein Kombinationsinstrument in einem Fahrzeug mit einer Anzeigeeinrichtung der erfindungsgemäßen Vorrichtung. Zudem betrifft der zweite Aspekt der Erfindung ein Fahrzeug mit einem solchen Kombinationsinstrument.

Gemäß einem anderen Aspekt dieser Offenbarung wird ein Verfahren bereitgestellt, welches bei der Inbetriebnahme einer Anzeigeeinrichtung durchgeführt wird. Bei diesem Verfahren wird ein Signal zur Inbetriebnahme der Anzeigeeinrichtung mit einer Anzeigefläche erfasst. Nach dem Erfassen des Signals wird auf der Anzeigefläche ein graphisches Element erzeugt. Das graphische Element wird von einer Ausgangslage in eine Endlage bewegt, wobei das graphische Element während der Bewegung eine Fläche auf der Anzeigefläche überstreicht. Während der Bewegung wird der bereits überstrichene Teil der Fläche in seiner visuell wahrnehmbaren Eigenschaft verändert. Hat das graphische Element die Endlage erreicht, wird zumindest auf der überstrichenen Fläche ein Anzeigeelement erzeugt, das eine Skala umfasst. Zudem umfasst das Anzeigeelement den Bereich mit der Skala.

Weiterhin kann bei einer Rückbewegung des graphischen Elements in seine Ausgangslage während der Rückbewegung beim Erreichen von einzelnen Skalenteilen der Skala eine Beschriftung der Skala erzeugt werden.

Das erzeugte Anzeigeelement entspricht insbesondere dem vorherig beschriebenen Anzeigeelement mit dem integrierten Bereich zum Anzeigen des kritischen Wertebereichs.

Wird ein Signal zum Ausschalten der Anzeigeeinrichtung erfasst, kann das Verfahren rückwärts ablaufen, so dass am Ende des Verfahrens weder das Anzeigeelement noch das graphische Element angezeigt werden.

Die Erfindung wird nun an Hand von Ausführungsbeispielen mit Bezug zu den beigefügten Zeichnungen erläutert.
- Figur 1: zeigt schematisch die Anordnung eines Ausführungsbeispiels der erfindungsgemäßen Vorrichtung in einem Fahrzeug,
- Figur 2: zeigt den Aufbau eines Ausführungsbeispiels der erfindungsgemäßen Vorrichtung,
- Figuren 3a und 3b: zeigen Ausgestaltungen eines Anzeigeelementes in einem ersten Anzeigemodus und einem zweiten Anzeigemodus, wie sie von einem Ausführungsbeispiel des erfindungsgemäßen Verfahrens auf der Anzeigefläche erzeugt werden können,
- Figuren 4a bis 4e: zeigen Anzeigen auf der Anzeigefläche, wie sie von dem erfindungsgemäßen Verfahren auf der Anzeigefläche erzeugt werden können,
- Figuren 5a bis 5c: zeigen Anzeigen des Anzeigeelements, wie sie in der Ansicht der Figur 4c auf der Anzeigefläche erzeugt werden können,
- Figuren 6a bis 6e: zeigen weitere Anzeigen auf der Anzeigefläche, wie sie von einem weiteren Ausführungsbeispiel des erfindungsgemäßen Verfahrens auf der Anzeigefläche erzeugt werden können,
- Figuren 7a bis 11f: zeigen Ausführungsbeispiele von Anzeigen auf der Anzeigefläche, wie sie während der Bedienung eines Bedienmenüs auf der Anzeigefläche angezeigt werden können,
- Figuren 12a bis 12d: zeigen Anzeigen, wie sie auf der Anzeigefläche beim Starten der Anzeigeeinrichtung auf der Anzeigefläche erzeugt werden können,
- Figuren 13a bis 13d: zeigen Anzeigen einer Energievorratsanzeige, wie sie von einem weiteren Ausführungsbeispiel des erfindungsgemäßen Verfahrens auf der Anzeigefläche erzeugt werden können,
- Figuren 14a und 14b: zeigen eine Integration der Energievorratsanzeige in ein erfindungsgemäßes Anzeigeelement, und
- Figuren 15a bis 15c: zeigen Anzeigen, wie sie von noch einem weiteren Ausführungsbeispiel des erfindungsgemäßen Verfahrens auf der Anzeigefläche erzeugt werden können.

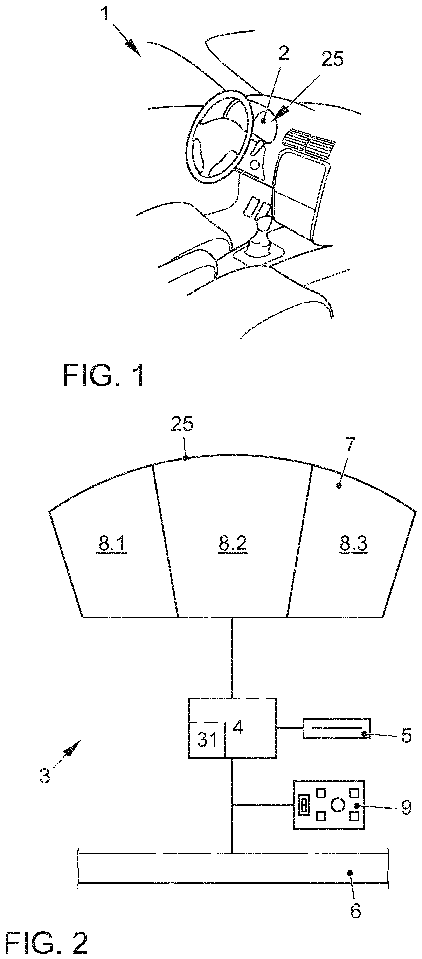

Fig. 1 zeigt ein Beispiel einer Innenansicht eines Fahrzeugs 1. In dem Fahrzeug 1 ist hinter einem Lenkrad eine als Kombinationsinstrument 25 ausgebildete Anzeigeeinrichtung 2 angeordnet, deren Anzeige im Blickfeld bzw. in der Nähe des Blickfeldes des Fahrers liegt.

In Fig. 2 ist der prinzipielle Aufbau einer Vorrichtung 3 mit der Anzeigeeinrichtung 2 dargestellt. Die Vorrichtung 3 umfasst eine Steuereinrichtung 4, die mit einer Erfassungseinheit 6 verbunden ist. Auf diese Weise können der Steuereinrichtung 4 Daten übertragen werden, aus denen die Steuereinrichtung 4 Graphikdaten für die Anzeigefläche 7 der Anzeigeeinrichtung 2 generieren kann. Ferner kann die Steuereinrichtung 4 auch über andere Schnittstellen Daten empfangen. Beispielsweise kann die Steuereinrichtung 4 direkt mit Sensoren und Steuergeräten des Fahrzeugs 1 oder anderen Einrichtungen zur Erzeugung von Graphikdaten gekoppelt sein. Beispielsweise kann ein Mobiltelefon eines Fahrzeuginsassen mit der Steuereinrichtung 4 gekoppelt werden. Auf diese Weise kann auf die Mediendateien oder das Telefonbuch des Mobiltelefons zugegriffen werden.

Des Weiteren ist die Steuereinrichtung 4 mit einem Datenspeicher 5 verbunden, aus dem für die Erzeugung der Graphikdaten erforderliche Daten ausgelesen werden können. Der Datenspeicher 5 kann beispielsweise eine oder mehrere digitale Straßenkarten enthalten.

Ferner können in dem Datenspeicher 5 Voreinstellungen, Bildparameter und Stellwerte gespeichert sein.

Zudem ist in die Steuereinrichtung 4 eine Ermittlungseinheit 31 integriert, mittels welcher für die Erzeugung der Graphikdaten erforderliche Ermittlungsschritte unternommen werden können. Die Ermittlungseinheit 31 kann insbesondere eine Recheneinheit umfassen, mittels welcher Werte berechnet werden können.

Des Weiteren ist die Steuereinrichtung 4 mit einer Bedieneinheit 9 verbunden, welche ein Bedienelement oder mehrere Bedienelemente umfasst. Mittels der Bedieneinheit 9 kann ein Nutzer die Anzeigen und Darstellungen der Anzeigeeinrichtung 2 steuern.

Die Steuereinrichtung 4 ist ferner mit einer frei programmierbaren Anzeigefläche 7 verbunden, welche verschiedene Anzeigebereiche 8.1 bis 8.3 aufweist. Dabei werden die Anzeigebereiche 8.1 bis 8.3 in Abhängigkeit von einem Anzeigemodus, in welchem sich die Anzeigeeinrichtung 2 befindet, angesteuert.

Bei der Anzeigefläche 7 kann es sich um ein Matrix-Display handeln, z. B. ein LCD (liquid crystal display), insbesondere ein Farbdisplay in TFT-(thin-film transistor)-Technik. Des Weiteren kann das Display in ein so genanntes twisted nematic-liquid crystal display (TN-LCD), ein super twisted nematic (STN) display, ein Doppelschicht-STN, ein FLC (ferroelectric liquid crystal) Display oder ein SSFLC (surface stabilized ferroelectric liquid crystal) sein. Der Anzeigefläche 7 ist eine (nicht gezeigte) Hintergrundbeleuchtung zugeordnet, die durch eine oder mehrere lichtemittierende Dioden bereitgestellt werden kann. Schließlich kann die Anzeigefläche 7 auch von einem Head-up-Display erzeugt werden.

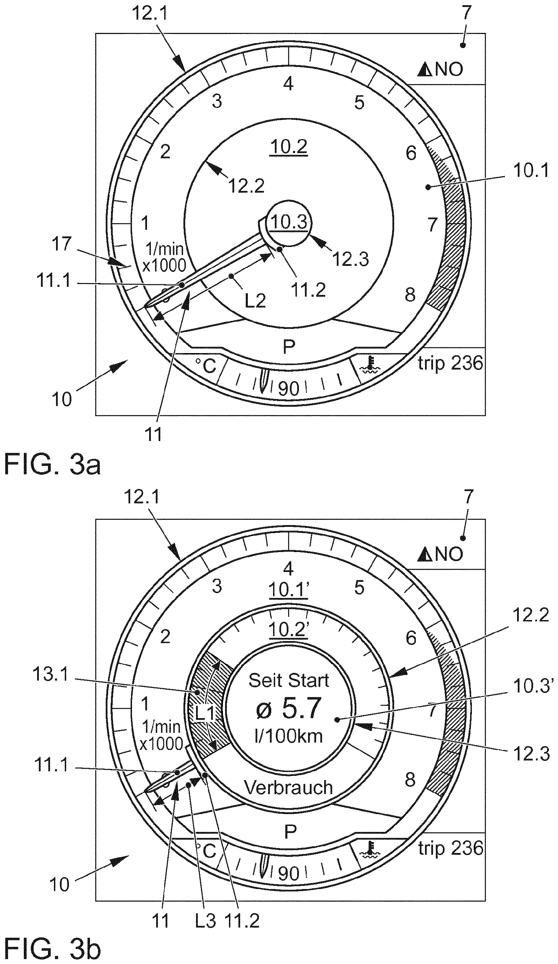

Mit Bezug zu Fig. 3a wird ein Anzeigeelement 10 erläutert, welches von den Graphikdaten erzeugt werden kann. Das Anzeigeelement 10 kann dabei insbesondere in dem ersten Anzeigebereich 8.1 oder in dem dritten Anzeigebereich 8.3 angezeigt werden. Das Anzeigeelement 10 stellt im ersten Anzeigemodus eine Anzeige der Motordrehzahl dar, die eine im Wesentlichen kreisförmige Begrenzung 12.1 und eine Skala 17 aufweist. Alternativ kann es sich bei dem Anzeigeelement 10 auch um eine Geschwindigkeitsanzeige, die ebenso eine im Wesentlichen kreisförmige Begrenzung 12.1 und eine Skala 17 aufweist, handeln. Es kann jedoch auch der Wert einer beliebigen anderen Zustandsgröße anstatt der Motordrehzahl oder der Geschwindigkeit angezeigt werden.

Das Anzeigeelement 10 ist weiterhin in drei Flächen 10.1 bis 10.3 unterteilt. In der ersten Teilfläche 10.1 wird die Skala 17 sowie eine Skalenbeschriftung mittels numerischer Werte angezeigt. Die Skala 17 zeigt die möglichen Werte der Motordrehzahl bzw. der Geschwindigkeit an.

Zudem weist das Anzeigeelement 10 eine zweite Teilfläche auf, die eine Mittelfläche 10.2 bereitstellt. Die Mittelfläche 10.2 ist durch die zweite Begrenzung 12.2 von der ersten Teilfläche 10.1 visuell abgegrenzt.

Eine dritte Teilfläche wird von der Innenfläche 10.3 bereitgestellt. Die Innenfläche 10.3 wird dabei durch die dritte Begrenzung 12.3 visuell von der zweiten Teilfläche bzw. der Mittelfläche 10.2 abgegrenzt.

Die drei Begrenzungen 12.1 bis 12.3 sind dabei kreisförmig ausgebildet. Das Anzeigeelement 10 stellt daher ein Rundinstrument, wie es in einem herkömmlichen Kombinationsinstrument 25 vorhanden ist, dar.

Im ersten Anzeigemodus wird weder in der Mittelfläche 10.2 noch in der Innenfläche 10.3 ein gesonderter Informationsinhalt angezeigt. In der Mittelfläche 10.2 wird vielmehr ein zeigerförmiges graphische Element 11 angezeigt und die Innenfläche 10.3 bildet im ersten Anzeigemodus einen Ankerpunkt für das graphische Element 11.

Das graphische Element 11 dient dazu, den momentanen Wert der Motordrehzahl oder der Geschwindigkeit auf der Skala 17 anzuzeigen. Das zeigerförmige graphische Element 11 kann dabei in einen Zeiger 11.1 sowie eine Zeigerbasis 11.2 unterteilt werden. Die Zeigerbasis 11.2 ist dabei direkt an der kreisförmigen Begrenzung 12.3 der Innenfläche 10.3 angeordnet. Dadurch entsteht der visuelle Eindruck, dass sich der Zeiger 11.1 um die Innenfläche 10.3 dreht, wenn sich die Motordrehzahl oder die Geschwindigkeit verändert.

Das Anzeigeelement 10 stellt im ersten Anzeigemodus ein Rundinstrument in einer klassischen Ansicht dar. Eine solch klassische Ausgestaltung wird insbesondere von bestimmten Nutzern bevorzugt.

Mit Bezug zu Fig. 3b wird das Anzeigeelement 10 in einem zweiten Anzeigemodus erläutert.

In dem zweiten Anzeigemodus bleibt die erste Teilfläche 10.1 des Anzeigeelements 10 unverändert. Dort wird weiterhin die Skala 17 angezeigt.

Der Radius der kreisförmigen Begrenzung 12.3 ist im zweiten Anzeigemodus vergrößert im Vergleich zur kreisförmigen Begrenzung 12.3 des ersten Anzeigemodus. Die Innenfläche 10.3 stellt nun eine innere Kreisscheibe 10.3' dar. Dadurch wird in der Innenfläche 10.3 des zweiten Anzeigemodus ein größerer Anzeigebereich bereitgestellt. In der inneren Kreisscheibe 10.3' wird im zweiten Anzeigemodus ein numerischer Wert eines Parameters angezeigt, beispielsweise der Durchschnittsverbrauch.

Da die erste Teilfläche 10.1 unverändert bleibt, hat die Vergrößerung des Radius der Innenfläche 10.2 eine Verkleinerung der Mittelfläche 10.2 zur Folge. Die Mittelfläche 10.2 stellt im zweiten Anzeigemodus einen Mittelring 10.2' dar, der zwischen der ersten Teilfläche 10.1 und der inneren Kreisscheibe 10.3' angeordnet ist. Dabei stellt die zweite Begrenzung 12.2 einen Außenradius und die dritte Begrenzung 12.3 einen Innenradius des Mittelringes 10.2' dar. Die erste Teilfläche 10.1 stellt dann einen Außenring 10.1' dar, wobei die zweite Begrenzung 12.2 den Innenradius und die erste Begrenzung 12.1 den Außenradius des Außenringes 10.1' sind.

In dem Mittering 10.2' wird der in der inneren Kreisscheibe 10.3' numerisch angezeigte Parameter graphisch umgesetzt. Es wird im vorliegenden Fall eine Balkendarstellung zur Anzeige des Durchschnittsverbrauches seit dem Start angezeigt. Dazu wird am Außenradius des Mittelringes 10.2' eine Skala angezeigt. Zudem wird zur Anzeige des momentanen Wertes des angezeigten Parameters ein längliches Element 13.1 mit einer bestimmten Bogenlänge L1 angezeigt. Ändert sich der momentane Wert des Durchschnittsverbrauches, so ändert sich auch die Bogenlänge L1 des in dem Mittelring 10.2' angezeigten graphischen Elements 13.1. Da die Geometrie des länglichen graphischen Elements 13.1 an die Geometrie des Mittelringes 10.2' angepasst ist, stellt es ein ringsegmentförmiges Element dar.

Das Zeigerelement 11 verändert sich im zweiten Anzeigemodus ebenso. Um zu verhindern, dass die graphische Umsetzung der in der inneren Kreisscheibe 10.3' angezeigten Informationen in dem Mittelring 10.2' durch das Zeigerelement 11 gestört wird, wird das Zeigerelement 11 im zweiten Anzeigemodus derart angezeigt, dass die Zeigerbasis 11.2 von der kreisförmigen Begrenzung 12.3 an die kreisförmige Begrenzung 12.2 des Mittelringes 10.2' verschoben wird. Dadurch ändert sich insbesondere die Ausgangslänge L2 des Zeigers 11.1 auf die Endlänge L3. Eine Veränderung der Motordrehzahl wird dann nur noch im Außenring 10.1', d. h. in der ersten Teilfläche 10.1, angezeigt. Das Zeigerelement 11 dreht sich dann um den Mittelring 10.2' des Anzeigeelements 10.

Das Anzeigeelement 10 im zweiten Anzeigemodus entspricht einer modernen Darstellung eines Rundinstrumentes. Vorteilhafterweise können in dieser Darstellung in einem Anzeigeelement 10 mehrere Informationen gleichzeitig in einem Anzeigeelement 10 angezeigt werden. Welche Informationen angezeigt werden, kann der Nutzer konfigurieren.

Der Wechsel von dem ersten Anzeigemodus in den zweiten Anzeigemodus kann insbesondere über eine Animation dargestellt werden. Bei dieser Animation kann die Innenfläche 10.3 fließend vergrößert werden, während gleichzeitig die Zeigerbasis 11.2 von der kreisförmigen Begrenzung 12.3 an die kreisförmige Begrenzung 12.2 des Mittelringes 10.2' fließend verschoben wird. Es sind auch andere Animationen vorstellbar, mittels welcher die in Fig. 3b gezeigte Anzeige erzeugt werden kann.

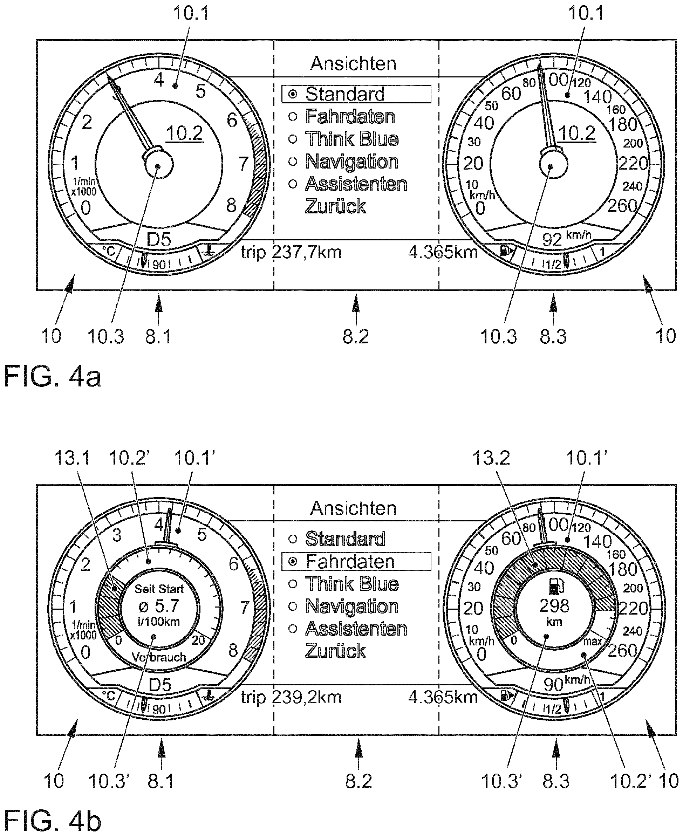

Mit Bezug zu den Figuren 4a bis 4e werden Anzeigen erläutert, wie sie von der Anzeigeeinrichtung 2 auf der Anzeigefläche 7 in den unterschiedlichen Anzeigemodi erzeugt werden können.

Dabei ist in Fig. 4a die klassische Anzeige gezeigt. In der klassischen Anzeige werden in den Anzeigebereichen 8.1 und 8.3 Rundinstrumente in der Ausgestaltung, wie sie in Fig. 3a gezeigt sind, erzeugt. Dabei wird im ersten Anzeigebereich 8.1 die Motordrehzahl und im dritten Anzeigebereich 8.3 die Geschwindigkeit des Fahrzeugs 1 angezeigt.

Möchte der Nutzer von der klassischen Ansicht auf eine moderne Ansicht wechseln, bzw. möchte sich der Nutzer mehrere Parameter anzeigen lassen, führt er eine Bedienaktion mit der Bedieneinheit 9 aus, mittels welcher in dem zweiten Anzeigebereich 8.2 eine Liste erzeugt wird. In der Liste sind alle möglichen Ansichten aufgelistet. Die klassische Ansicht wird dabei als erster Anzeigemodus definiert.

Über die Bedieneinheit 9 kann der Nutzer weiterhin aus der Liste einen der Listeneinträge auswählen.

Wählt der Nutzer die Ansicht "Fahrdaten" aus, wird dies als Bedienaktion erfasst, mittels welcher die Anzeigeeinrichtung 2 ausgehend von dem ersten Anzeigemodus in einen zweiten Anzeigemodus gebracht werden kann. Dabei stellt jede in der Liste aufgelistete Ansicht einen zweiten Anzeigemodus dar. Die Steuereinrichtung 4 tritt zunächst mit der Erfassungseinheit 6 in Verbindung, welche die Parameter, welche für die Ansicht "Fahrdaten" abgespeichert sind, erfasst. Diese holt sie beispielsweise aus dem Datenspeicher 5. Aus den im Datenspeicher 5 gespeicherten Daten erzeugt die Steuereinrichtung 4 in der inneren Kreisscheibe 10.3' eine Anzeige, in welcher der Durchschnittsverbrauch seit dem Start des Fahrzeuges 1 angezeigt wird. Zuvor wurde bereits die Innenfläche 10.3 zur innere Kreisscheibe 10.3', wie mit Bezug zu Fig. 3b erläutert, vergrößert. Gleichzeitig wird in dem Mittelring 10.2' ein längliches Element 13.1, wie ebenso bereits mit Bezug zu Fig. 3b erläutert, erzeugt.

Im dritten Anzeigebereich 8.3, also in dem Anzeigebereich, in dem die Geschwindigkeitsanzeige angezeigt wird, wird in der entsprechenden inneren Kreisscheibe 10.3' die verbleibende Restreichweite, welche im vorliegenden Beispiel 298 km beträgt, angezeigt. Auch diese wurde mittels der Erfassungseinheit 6 aus dem Datenspeicher 5 abgerufen. In dem Mittelring 10.2' des Anzeigeelements 10 des dritten Anzeigebereichs 8.3 wird dann ein längliches Element 13.2 dargestellt, dessen Länge die Restreichweite von 298 km darstellt. Die Länge des länglichen Elements 13.2 kann während des Betriebs des Fahrzeugs 1 an den Fahrstil des Fahrers angepasst werden. Bekannterweise ändert sich die Restreichweite schließlich mit dem Fahrverhalten und der zurückgelegten Strecke des Fahrzeugs 1.

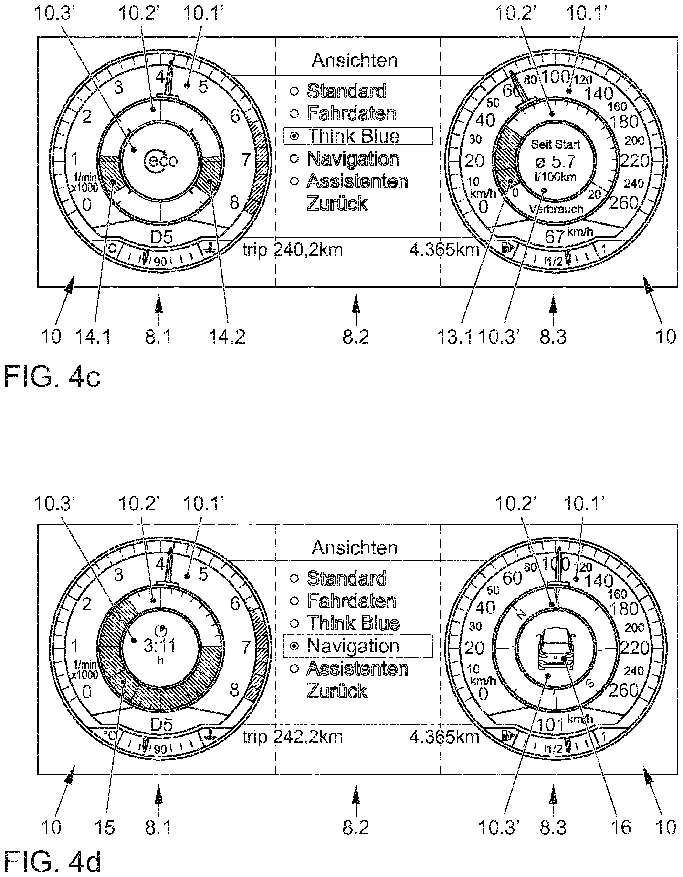

Wechselt der Fahrer hingegen von der Ansicht "klassisch", wie sie in Fig. 4a gezeigt ist, in die Ansicht "Think blue", wird die in Fig. 4c dargestellte Anzeige erzeugt. Dabei wird zunächst wieder die mit Fig. 3b erläuterte Aufteilung des Anzeigeelements 10 in einen Außenring 10.1', einen Mittelring 10.2' und die innere Kreisscheibe 10.3' sowohl im ersten Anzeigebereich 8.1, als auch im dritten Anzeigebereich 8.3 erzeugt.

In der Ansicht "Think blue" soll der Nutzer insbesondere unterstützt werden, energiesparend zu fahren. Dabei werden in dem Mittelring 10.2' des Anzeigeelements 10 des ersten Anzeigebereichs 8.1 zwei graphische Elemente 14.1 und 14.2 angezeigt. In der inneren Kreisscheibe 10.3' wird dem Nutzer angezeigt, dass es sich bei der Anzeige um eine ECO-Anzeige handelt.

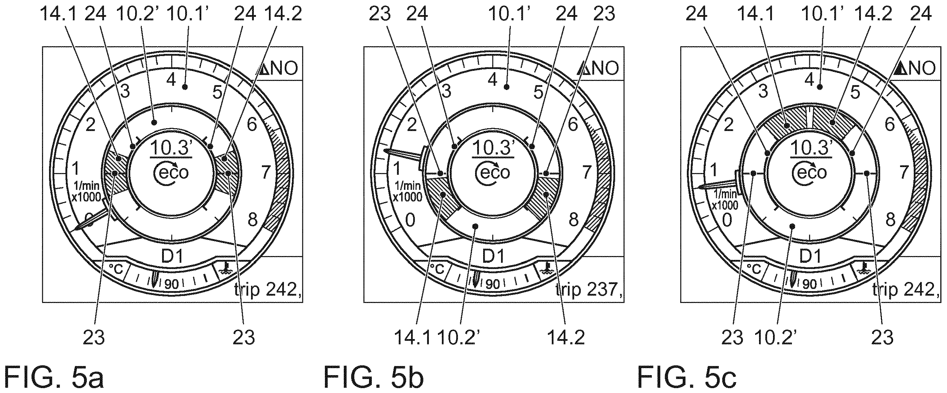

Die Erzeugung der Graphikdaten in dieser Ansicht wird mit Bezug zu den Figuren 5a bis 5c erläutert.

Zunächst wird von der Steuervorrichtung 4 ermittelt, ob das Fahrzeug 1 beschleunigt. Beschleunigt das Fahrzeug 1 nicht, wie es beispielweise im Parkmodus der Fall ist, wird in dem Mittelring 10.2' eine Anzeige erzeugt, wie sie in Figur 5a dargestellt ist.

In dem Mittelring 10.2' wird zu jeder Seite der inneren Kreisscheibe 10.3' ein ringsegmentartiges graphisches Objekt 14.1 und 14.2 angezeigt. Zudem wird zu beiden Seiten der inneren Kreisscheibe 10.3' eine Markierung 23 angezeigt, welche horizontal durch die Mitte des Mittelringes 10.2' verläuft. Wäre der Mittelring 10.2' eine Kreisscheibe würde die Markierung 23 den Mittelring 10.2' in zwei gleichgroße Halbkreisscheiben teilen.

Die ringsegmentartigen Objekte 14.1 und 14.2 sind dabei derart in dem Mittelring 10.2' angeordnet, dass sie von der Markierung 23 halbiert werden, wenn keine Beschleunigung erfasst wird. Weiterhin wird zu beiden Seiten der inneren Kreisscheibe 10.3' in dem Mittelring 10.2' ein Bereich 24 markiert angezeigt.

Fährt das Fahrzeug 1 los, wird eine positive Beschleunigung erfasst. Das Fahrzeug 1 gewinnt an Geschwindigkeit. Dies wird dadurch angezeigt, dass die beiden ringsegmentförmigen Objekte 14.1 und 14.2 in gleichem Maße nach unten verschoben werden. Dabei ist die Weite und Schnelligkeit der Verschiebung der ringsegmentförmigen Objekte 14.1 und 14.2 abhängig von der Stärke der erfassten Beschleunigung. Tritt der Fahrer das Gaspedal beispielsweise bis zum Fahrzeugboden durch, wird das Fahrzeug 1 einen Kickstart durchführen. Dieser ist jedoch nicht energiesparend. Durch eine weite Verschiebung der beiden ringsegmentförmigen Objekte 14.1 und 14.2 nach unten wird dem Fahrer signalisiert, dass die momentane Beschleunigung negative Auswirkungen auf eine energiesparende Fahrweise hat. Um diesen negativen Effekt zu verdeutlichen können die ringsegmentförmigen Objekte 14.1 und 14.2 in einer anderen Farbe und/oder pulsierend dargestellt werden, wenn sie den markierten Bereich 24 verlassen.

Tritt der Fahrer auf die Bremse, verliert das Fahrzeug 1 an Geschwindigkeit. Es wird eine negative Beschleunigung des Fahrzeugs 1 erfasst. Die ringsegmentförmigen Objekte 14.1 und 14.2 werden gleichzeitig und in gleichem Maße nach oben verschoben. Dabei ist die Weite und Geschwindigkeit der Verschiebung wiederum von der Stärke, mit der der Fahrer bremst, abhängig. Tätigt er beispielsweise eine Vollbremsung, werden die ringsegmentartigen Objekte 14.1 und 14.2, wie in Figur 5c gezeigt, nach ganz oben verschoben, bis sie fast aufeinander treffen. Dabei verlassen sie fast in vollem Umfang den Bereich 24.

Durch die Bewegung der ringsegmentförmigen Objekte 14.1 und 14.2 wird dem Fahrer auf intuitive Weise seine Fahrweise veranschaulicht. Bei einer ruhigen und gleichmäßigen Fahrweise werden sich die ringsegmentförmigen Objekte 14.1 und 14.2 lediglich leicht bewegen. Bei einer unruhigen Fahrweise mit vielen Beschleunigungsvorgängen werden sich die ringsegmentförmigen Objekte 14.1 und 14.2 hingegen unruhig in dem Mittelring 10.2' hin und her bewegen. Dies führt nicht nur zu einer unruhigen Fahrt, sondern auch zu einem erhöhten Energieverbrauch. Die Ansicht "Think blue" kann daher als Trainer für eine energiesparende und vorausschauende Fahrweise verwendet werden.

Im dritten Anzeigebereich 8.3 wird in der Ansicht "Think blue" insbesondere wiederum der Durchschnittsverbrauch seit dem Start in bekannter Weise angezeigt.

Wählt der Fahrer ausgehend von der Ansicht "Standard" die Ansicht "Navigation", steuert die Steuereinrichtung 4 das Navigationsgerät an, um dort gewünschte Daten in den Mittelring 10.2' und die innere Kreisscheibe 10.3' des ersten Anzeigebereichs 8.1 und des dritten Anzeigebereichs 8.3 zu holen. Dies ist in Fig. 4d gezeigt.

In der inneren Kreisscheibe 10.3' des ersten Anzeigebereichs 8.1 wird dann beispielsweise die verbleibende Restzeit zum gewünschten Ziel numerisch angezeigt. In dem Mittelring 10.2' des ersten Anzeigebereichs 8.1 wird diese Zeit graphisch in ein ringsegmentförmiges Element 15 umgesetzt. Verringert sich die Zeit bis zum Ziel, so verkürzt sich auch die Länge des ringsegmentförmigen Elements 15. Dadurch wird dem Nutzer auf anschauliche Weise dargestellt, wie lange seine Reise noch dauert. Der in der inneren Kreisscheibe 10.3' angezeigte numerische Wert wird in dem Mittelring 10.2' durch das ringsegmentförmige Element 15 graphisch veranschaulicht.

In der inneren Kreisscheibe 10.3' des dritten Anzeigebereichs 8.3 wird ein Ego-Fahrzeug 16 angezeigt. In dem Mittelring 10.2' wird ein Kompass angezeigt, welcher die Himmelsrichtungen anzeigt. Durch diese Anzeige wird dem Fahrer ständig angezeigt, in welche Himmelsrichtung er sich momentan bewegt. Verändert das Fahrzeug 1 die Bewegungsrichtung, so dreht sich der Kompass in dem Mittelring 10.2' mit.

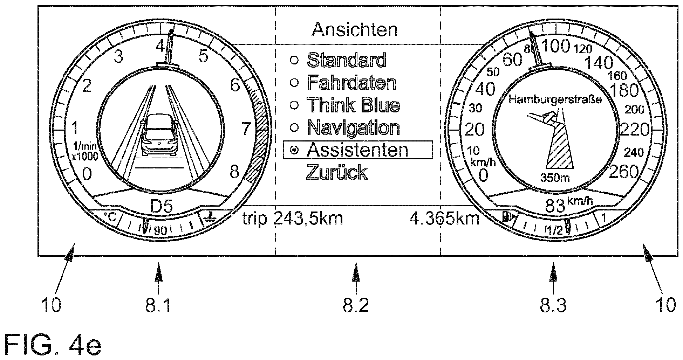

Der Nutzer kann zudem die Ansicht "Assistenten" auswählen. Dann wird ihm eine Anzeige angezeigt, wie sie in Fig. 4e gezeigt ist.

Da bei der Ansicht "Assistenten" keine Werte eines Parameters angezeigt werden sollen, fehlt der Mittelring 10.2'. Das Anzeigeelement 10 ist lediglich in den Außenring 10.1' und die innere Kreisscheibe 10.3' aufgeteilt.

Über die Steuereinrichtung 4 wird der Datenspeicher 5 angesteuert, in welchem die momentanen Einstellungen für Fahrerassistenzsysteme abgespeichert sind. Über die aus dem Datenspeicher 5 abgerufenen Daten wird dann eine graphische Darstellung der aktivierten Fahrerassistenzsysteme in der inneren Kreisscheibe 10.3' erzeugt. Im vorliegenden Beispiel ist ein Rückfahrassistent aktiviert. Durch diese Darstellung erhält der Nutzer auf einen Blick eine Übersicht über die im Fahrzeug 1 aktivierten Fahrerassistenzsysteme.

Im dritten Anzeigebereich 8.3 wird in der zweiten Teilfläche 10.2 des Anzeigeelements 10 eine Streckenführung angezeigt. Dadurch kann der Fahrer sich auch Informationen zur Navigation anzeigen lassen, wenn er sich gerade nicht in der Ansicht der Navigation befindet.

Es wird angemerkt, dass ein Wechsel zwischen den verschiedenen Ansichten nicht nur von der klassischen Anzeige aus möglich ist. Auch ein Wechsel zwischen den Ansichten ausgehend von der Ansicht "Fahrdaten", der Ansicht "Think blue", der Ansicht "Navigation" oder der Ansicht "Assistenten" ist möglich. Weiterhin ist auch ein Wechsel von allen Ansichten in die Ansicht "Standard", also die klassische Ansicht, möglich. Die Animation läuft dann entsprechend rückwärts ab.

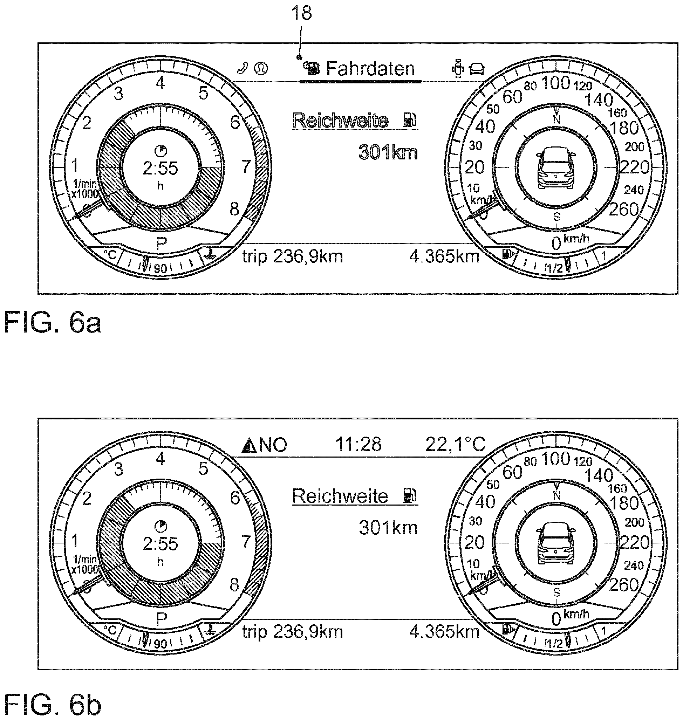

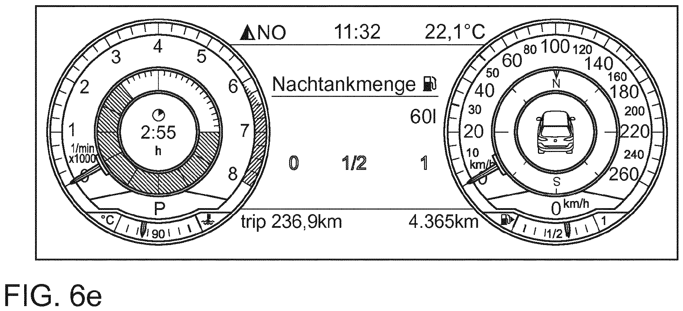

Um überhaupt zum Menüpunkt "Ansichten" zu gelangen, ist im zweiten Anzeigebereich 8.2 der Anzeigefläche 7 die Möglichkeit einer Menüführung gegeben. Dazu wird in einem oberen Bereich des zweiten Anzeigebereichs 8.2 ein Bedienmenü 18 angezeigt, wie es in Fig. 6a gezeigt ist. Das Bedienmenü 18 umfasst dabei mehrere Menüpunkte, welche über die Bedieneinheit 9 auswählbar sind. Über das Bedienmenü 18 kann der Nutzer sich nicht nur momentan vorliegende Fahrzeugdaten anzeigen lassen, sondern auch mit dem Fahrzeug 1 gekoppelte externe Geräte steuern. Weiterhin kann der Nutzer sich über das Bedienmenü 18 die Parameter aussuchen, welche in den unterschiedlichen Ansichten in dem Mittelring 10.2' und der inneren Kreisscheibe 10.3' in den Anzeigeelementen 10 angezeigt werden sollen.

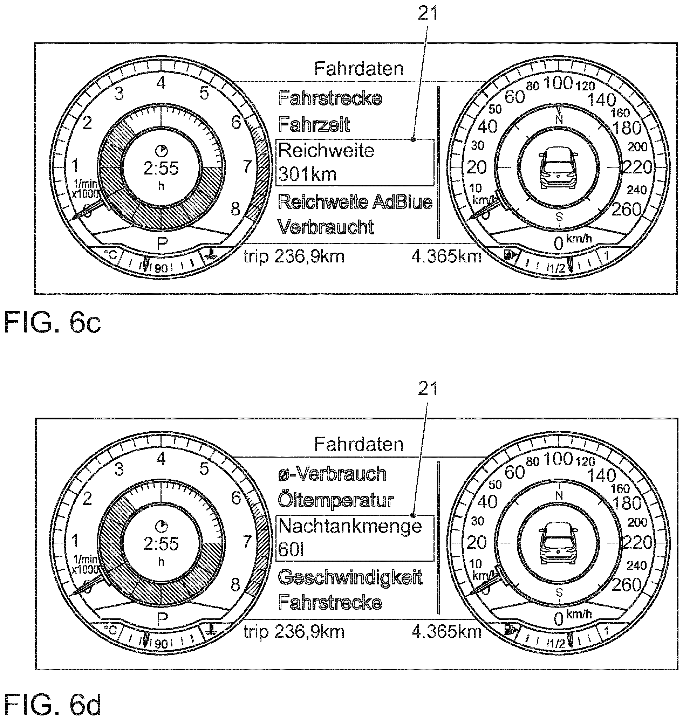

Im Beispiel der Fig. 6a hat der Nutzer den Menüpunkt "Fahrdaten" ausgewählt. Dem Nutzer wird dann der aus den Fahrdaten zuletzt ausgewählte Parameter, im vorliegenden Fall "Reichweite", angezeigt. Unternimmt der Nutzer innerhalb einer vorgegebenen Zeit keine weitere Bedienaktion, wird der ausgewählte Menüpunkt Reichweite vergrößert dargestellt. Dies ist in Fig. 6b dargestellt. Tätigt der Nutzer hingegen eine Bedienaktion, öffnet sich eine Liste, in welcher die unterschiedlichen Fahrdaten aufgelistet sind. Dabei wird dem Nutzer über eine Markierung 21 angezeigt, welcher Punkt der Fahrdaten momentan ausgewählt ist, wie es in Fig. 6c gezeigt ist. Über eine Bedienaktion kann der Nutzer einen Bildlauf erzeugen, mittels welchem er durch die Liste scrollen kann. Durch eine weitere Bedienaktion kann der Nutzer einen anderen Menüpunkt wählen, welcher ihm dann wiederum groß angezeigt wird. Dies ist in den Figuren 6c und 6d angezeigt, in welchen sich der Nutzer den Menüpunkt "Nachtankmenge" vergrößert anzeigen lassen möchte. Wählt der Nutzer keinen anderen Menüpunkt mehr aus, wird, wenn der Nutzer in den Ansichten die Ansicht "Fahrdaten" wählt, anstelle der Reichweite, wie in Fig. 4b gezeigt, der Wert zur Nachtankmenge angezeigt. Dabei ist es unabhängig davon, welche Ansicht momentan für die Anzeigefläche ausgewählt ist.

Der ausgewählte Parameter ist weiterhin von der Steuereinrichtung 4 automatisch einer Ansicht zuordenbar. Dies bedeutet, dass, wenn über das Menü ein Parameter ausgewählt wird, welcher unter die Kategorie Navigation fällt, dieser der Ansicht "Navigation" zugeordnet wird und dann in dem Mittelring 10.2' und der inneren Kreisscheibe 10.3' angezeigt wird, wenn die Ansicht "Navigation" ausgewählt wird.

Zudem kann das Bedienmenü 18 einen Menüpunkt enthalten, welcher extra zur Konfiguration der Ansichten dient. Dabei kann der Nutzer nicht nur die Parameter aus einer Liste von Parametern auswählen, die in den verschiedenen Ansichten in dem Mittelring 10.2' und der inneren Kreisscheibe 10.3' angezeigt werden sollen. Vielmehr kann der Nutzer auch die Darstellungsart der Parameter in der inneren Kreisscheibe 10.3' und dem Mittelring 10.2' auswählen. Beispielsweise können in der inneren Kreisscheibe 10.3' anstelle von numerischen Werten auch Balkendarstellungen angezeigt werden.

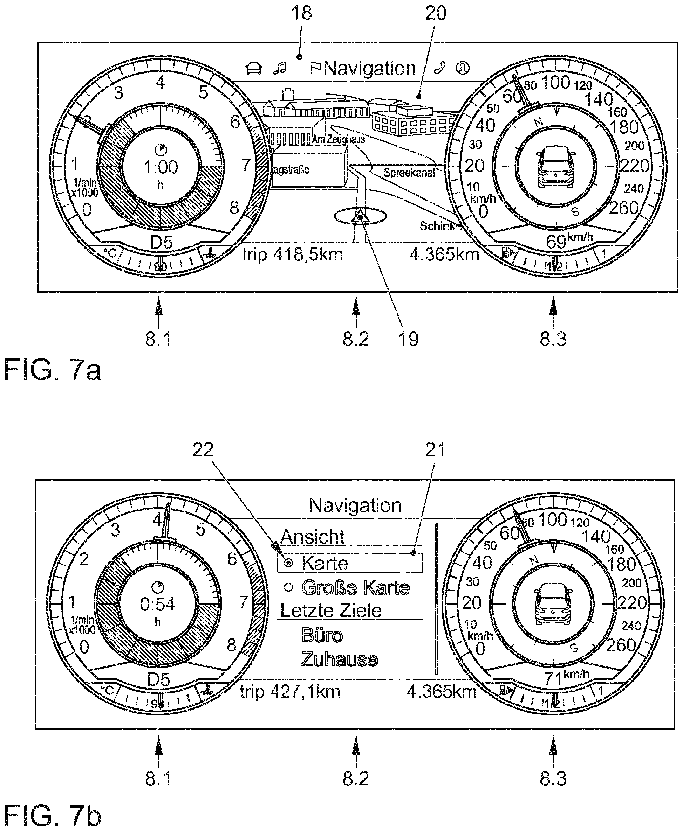

Mit Bezug zu den Figuren 7a bis 7f wird eine Bedienung des Navigationssystems mit der Anzeigeeinrichtung 2 erläutert. Wird aus dem Bedienmenü 18 der Menüpunkt "Navigation" ausgewählt, wird im zweiten Anzeigebereich 8.2 auf der Anzeigefläche 7 zunächst eine geographische Karte 20 dargestellt, wie es bei normalen Navigationssystemen die Regel ist. Dabei stellt das graphische Objekt 19 den Ort des Fahrzeugs 1 innerhalb der geographischen Karte 20 dar. Der Nutzer erhält also bereits im Kombinationsinstrument 25 die Möglichkeit, die geographische Karte 20 zu sehen.

Einstellungen zur Ansicht des Navigationssystems können dabei über den zweiten Anzeigebereich 8.2 getätigt werden. Führt der Nutzer eine entsprechende Bedienaktion aus, bei der es sich beispielsweise um die Berührung eines Touch-Screens in der Mittelkonsole des Fahrzeugs, eine Bedienaktion an einem Dreh-Drück-Steller, ebenso in der Mittelkonsole des Fahrzeugs, oder eine Bedienaktion an einem Bedienelement, welches in einem Multifunktionslenkrad angeordnet ist, handeln kann, so wird ein Menü, wie es in Fig. 7b gezeigt ist, geöffnet. Dabei ist die momentan eingestellte Ansicht über das Auswahlelement 22 angezeigt. Die Markierung 21 bezeichnet dabei, wo sich der Nutzer gerade in der Liste befindet. Möchte der Nutzer die Einstellung zur Kartenansicht nicht verändern, so wählt er durch eine Bedienaktion den Menüpunkt "Karte" erneut aus. Alternativ kann auch ein automatischer Time-Out dafür sorgen, dass die momentan ausgewählte Kartenansicht wieder angezeigt wird, wenn keine weitere Bedienaktion erfolgt.

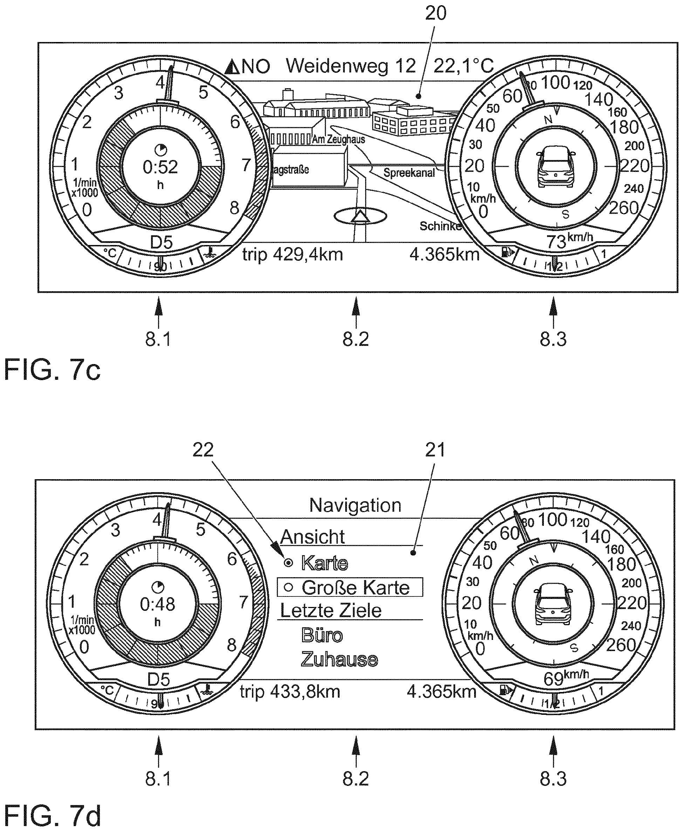

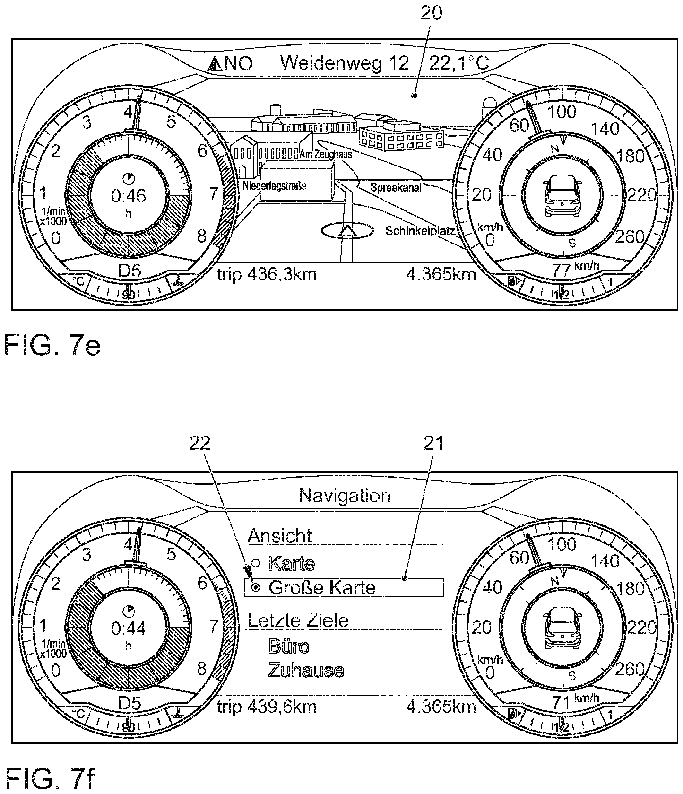

Daraufhin wird in dem zweiten Anzeigebereich 8.2 wiederum die geographische Karte 20 dargestellt. In dem oberen Bereich, in dem vorher das Bedienmenü 18 angezeigt wurde, wird dann der Straßenname der Straße angezeigt, auf welcher sich das Fahrzeug 1 momentan befindet, wie es in Fig. 7c gezeigt ist. Alternativ kann der Nutzer auch die Ansicht in der Navigation verändern. Wählt er beispielsweise durch die Markierung 21 den Menüpunkt "Große Karte" aus, wie es in Fig. 7d gezeigt ist, so wird eine Ansicht, wie sie in Fig. 7e gezeigt ist, erzeugt. Um auf der Anzeigefläche 7 insgesamt Platz für die neue Darstellung zu schaffen, werden die Anzeigeelemente 10 in den Anzeigebereichen 8.1 und 8.3 durch eine Animation verkleinert. Der Maßstab der geographischen Karte 20 wird nicht verändert. Vielmehr wird auf dem nun bereitstehenden Platz die Umgebung, in der sich das Fahrzeug 1 befindet, in einem größeren Radius dargestellt. Dadurch kann sich der Nutzer einen besseren Überblick über die Umgebung des Fahrzeugs 1 verschaffen. In der Menüansicht ist dann der Menüpunkt "Große Karte" durch das Auswahlelement 22 markiert, wie in Figur 7f gezeigt.

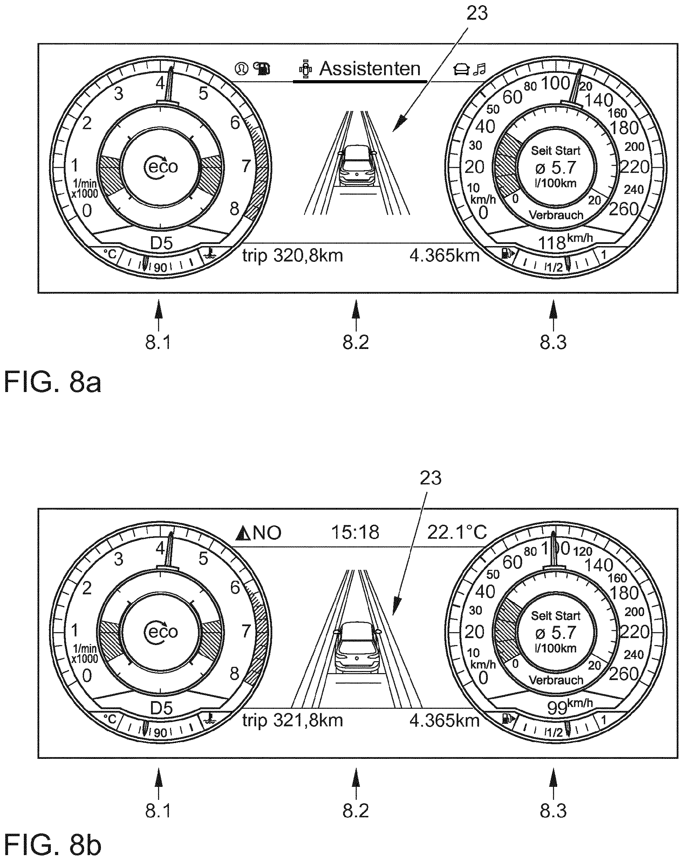

Über den Menüpunkt "Assistenten" des Bedienmenüs 18 kann der Nutzer auswählen, welche Fahrerassistenzsysteme aktiviert werden bzw. deaktiviert werden sollen. In Fig. 8a ist hierzu beispielhaft eine Anzeige gezeigt, wie sie auf der Anzeigefläche 7 erzeugt wird, wenn der Nutzer über die Bedieneinheit 9 den Bedienpunkt "Assistenten" ansteuert. Hat er den Menüpunkt "Assistenten" noch nicht ausgewählt, so wird das zugehörige Icon 23 zunächst verkleinert dargestellt. Unternimmt der Nutzer innerhalb einer vorbestimmten Zeit keine weitere Bedienaktion, wird der Menüpunkt "Assistenten" automatisch ausgewählt.

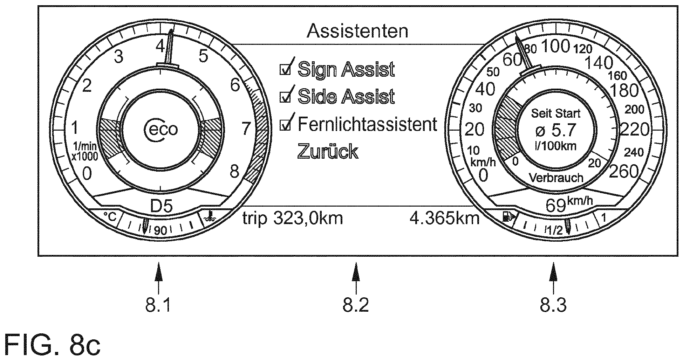

Wählt der Nutzer den Menüpunkt "Assistenten" aus, wird eine Anzeige gemäß Fig. 8b im zweiten Anzeigebereich 8.2 erzeugt. Das Icon 23 ist dann im Gegensatz zum Icon 23 in Fig. 8a vergrößert dargestellt. Durch eine entsprechende Bedienaktion lässt sich wiederum eine Liste öffnen, über welche die zu deaktivierenden bzw. zu aktivierenden Fahrerassistenzsysteme angezeigt werden. Dies ist in Fig. 8c gezeigt. Im vorliegenden Beispiel sind alle Fahrerassistenzsystem aktiviert.

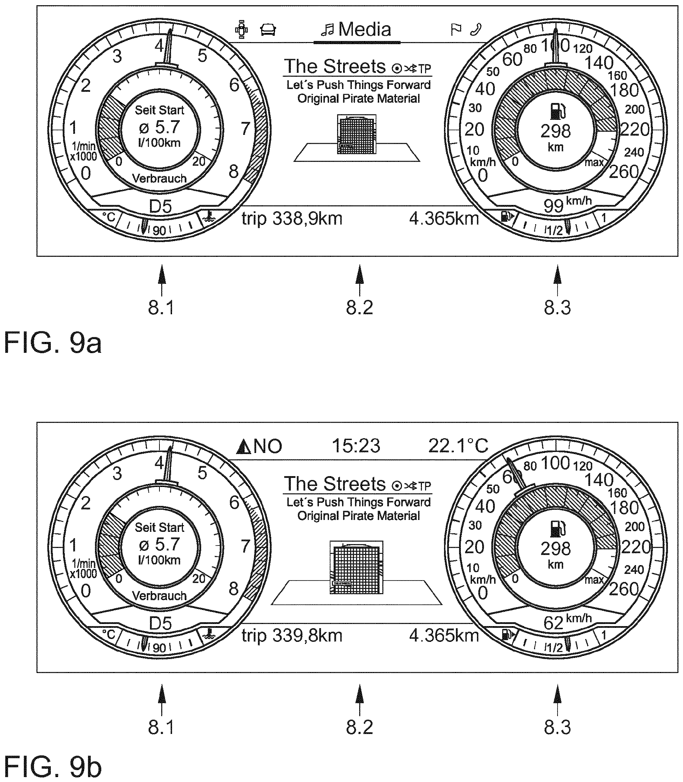

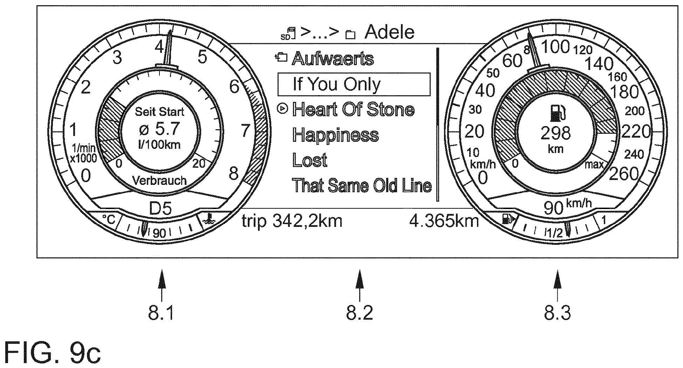

Mit Bezug zu den Figuren 9a bis 9c wird eine Menüführung für einen Menüpunkt "Media" erläutert. Dabei können Graphikdaten entweder dadurch erzeugt werden, dass die Steuereinrichtung 4 ein mit dem Fahrzeug 1 verbundenes externes Gerät, beispielsweise ein Mobiltelefon oder einen Tablet-Computer des Nutzers, ansteuert und auf die dort abgespeicherten Mediatheken zugreift, oder dadurch dass die Steuereinrichtung 4 auf ein internes Mediensystem des Fahrzeugs 1 zugreift. Bei einer entsprechenden Bedienaktion wird dann zunächst der zuletzt abgespielte Musiktitel angezeigt. Möchte der Nutzer den abgespielten Musiktitel verändern, so kann er einen neuen Musiktitel über Bedienaktionen aus einer Liste von Musiktiteln auswählen.

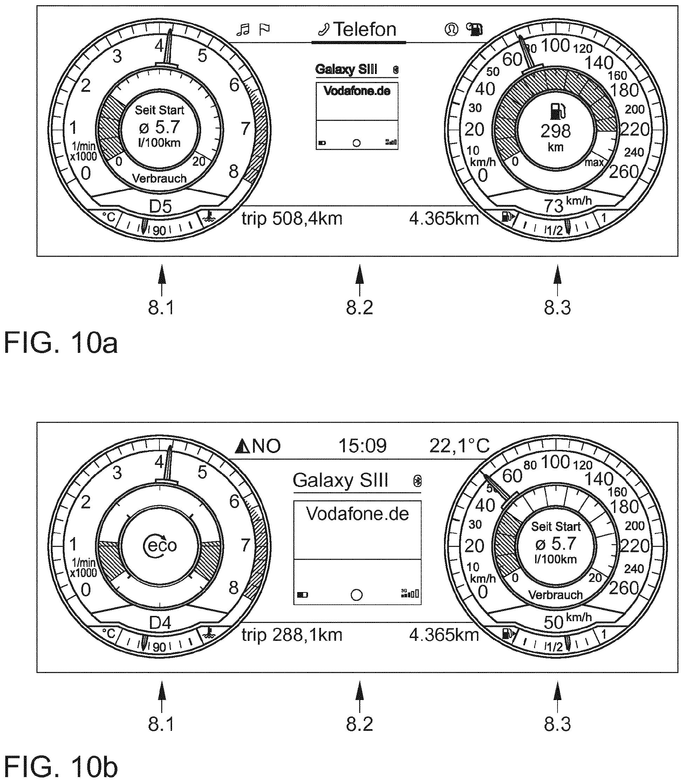

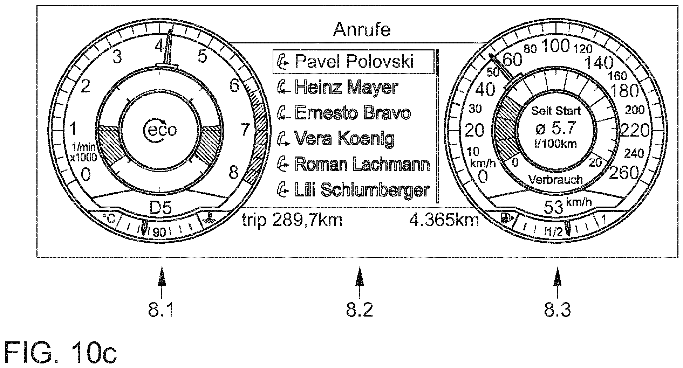

Die Steuereinrichtung 4 kann zudem auf die Telefonbucheinträge eines Mobiltelefons zugreifen. Dadurch kann der Fahrer dann über das Fahrzeug 1 Telefonanrufe tätigen. Dies ist in den Figuren 10a bis 10c gezeigt.

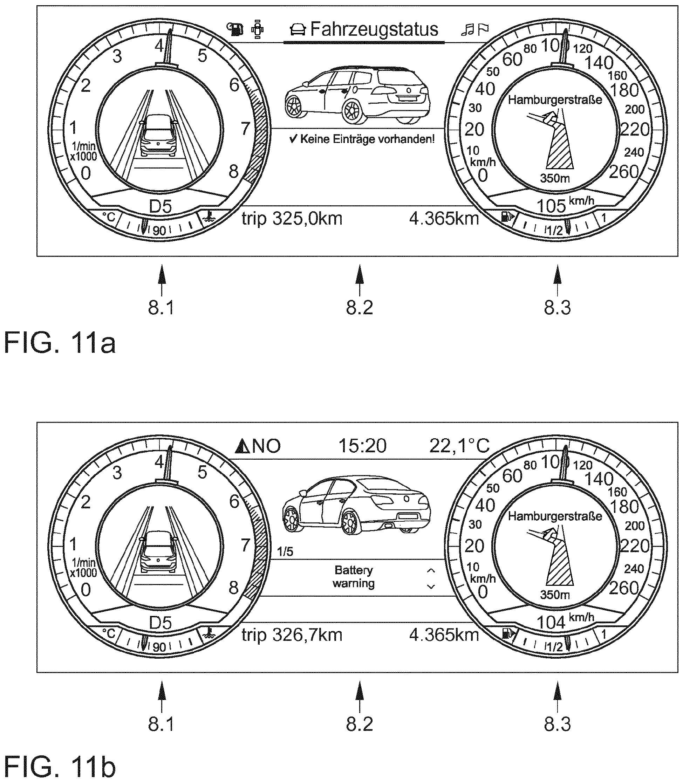

Einen weiteren Menüpunkt des Bedienmenüs 18 stellt der Fahrzeugstatus dar. Dabei zeigen die Figuren 11a bis 11f Beispiele für Anzeigen, wie sie auf der Anzeigefläche 7 erzeugt werden können, wenn Warnungen oder Informationen zum Fahrzeugstatus angezeigt werden.

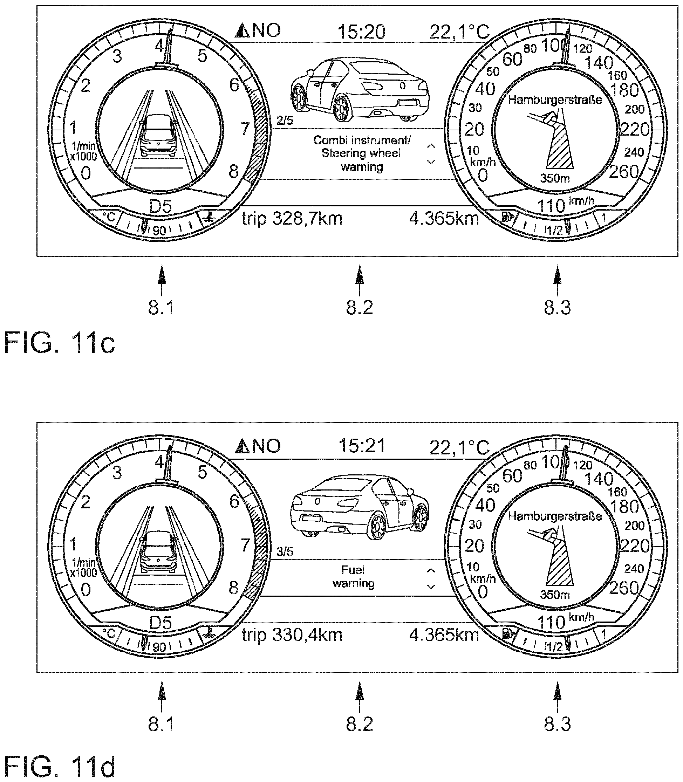

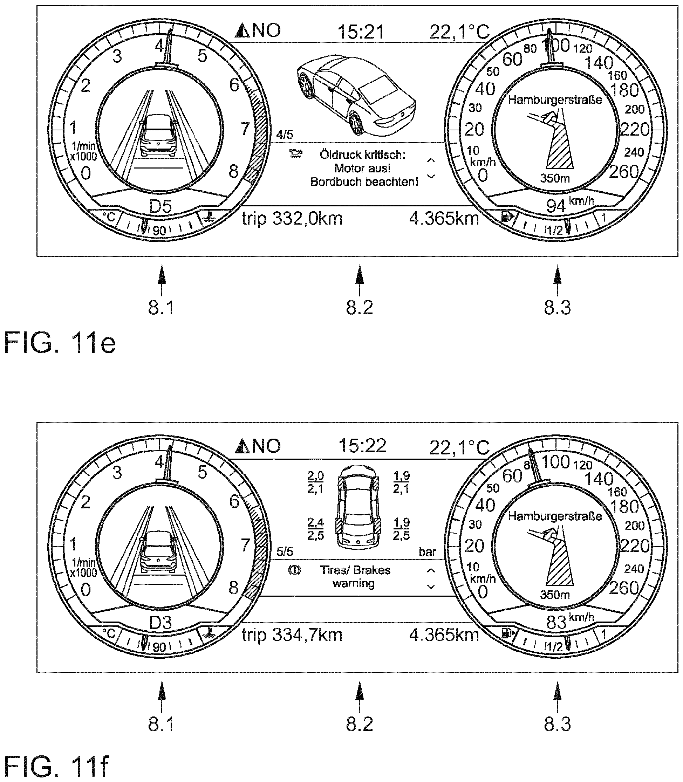

Sind keine Einträge vorhanden, so wird eine Anzeige gemäß Fig. 11a erzeugt. Bei einer Warnung für die Batterie, beispielsweise bei geringem Ladestand, wird eine Anzeige, wie sie in Fig. 11b gezeigt ist, erzeugt. Ermittelt die Steuereinrichtung 4 eine Warnung für das Kombinationsinstrument 25 oder das Lenkrad, so gibt die Anzeigefläche 7 eine Warnung für diese aus. Dies ist in Fig. 11c gezeigt. In Fig. 11d wird die Anzeige gezeigt, wie sie erzeugt wird, wenn eine Tankwarnung vorliegt. Befindet sich der Öldruck in einem kritischen Bereich, so dass der Motor ausgeschaltet werden sollte, wird eine Warnanzeige gemäß der Fig. 11e erzeugt. Für eine Warnung für die Bremse, beispielsweise bei abgenutzten Bremsbelägen, wird eine Anzeige gemäß Fig. 11f erzeugt. Die in den Figuren 11a bis 11f gezeigten Warnungen können beispielsweise auch als Pop-Up-Anzeigen in dem Moment auf der Anzeigefläche 7 erscheinen, in dem das Problem erfasst wird.

Es wird angemerkt, dass die Anzeige im zweiten Anzeigebereich 8.2 unabhängig davon ist, welche Ansicht für die Anzeigebereiche 8.1 und 8.3 ausgewählt wurde. Die Anzeigen der fahrzeugspezifischen Parameter in den Teilbereichen 10.3 und 10.2 bzw. 10.3' und 10.2' der Rundinstrumente kann unabhängig von den im Anzeigebereich 8.2 angezeigten Informationen gewählt werden.

Zudem können jegliche angezeigte Informationen nach einem vorbestimmten Zeitintervall, in dem keine Bedienaktion erfasst wird, aus dem zweiten Anzeigebereich 8.2 von der Anzeigefläche 7 verschwinden. Dem Nutzer werden dann keine überflüssigen Informationen in dem zweiten Anzeigebereich 8.2 angezeigt.

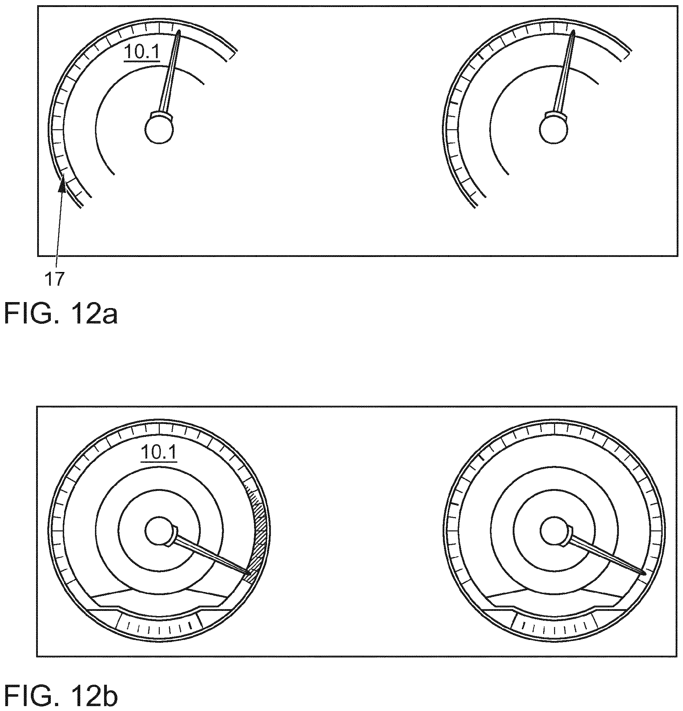

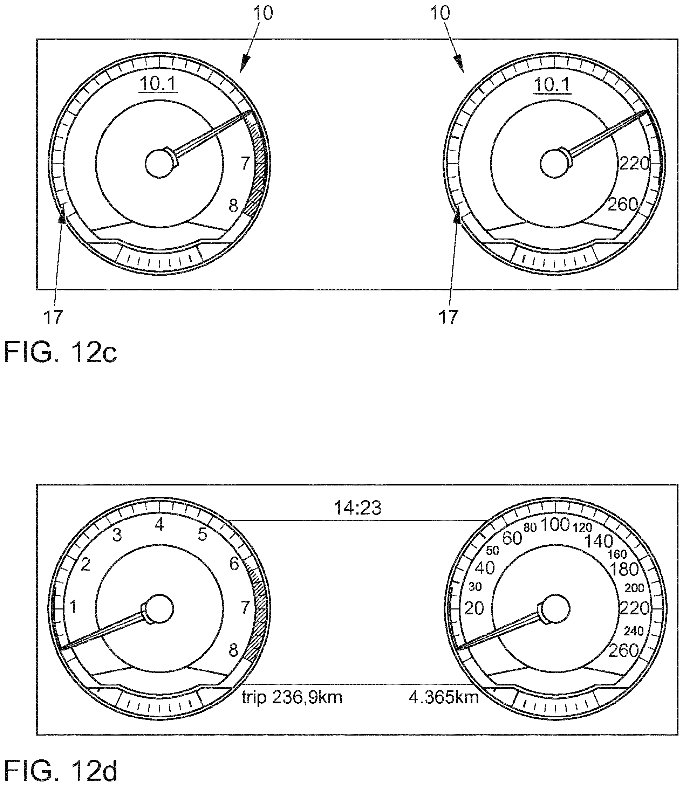

Mit Bezug zu den Figuren 12a bis 12d wird die Anzeige auf der Anzeigefläche 7 erläutert, wie sie während der Inbetriebnahme der Anzeigefläche 7, erzeugt wird.

Es wird zunächst ein Signal erfasst, welches signalisiert, dass die Anzeigeeinrichtung in Betrieb genommen wird.

Daraufhin wird das graphische Element 11, also das zeigerförmige Element mit dem Zeiger 11.1 und der Zeigerbasis 11.2 sowie die Innenfläche 10.3 des ersten Anzeigemodus auf der Anzeigefläche 7 erzeugt.

Der Zeiger 11.1 und die Zeigerbasis 11.2 werden um die Innenfläche 10.3 kreisförmig von einer definierten Ausgangslage bewegt. Der Zeiger 11.1 bewegt sich dabei bis zu einer definierten Endlage, welche vorzugsweise bei der vorgesehenen Endlage der Skalenstriche der Skala 17, liegt. Während der Bewegung des Zeigers 11.1 werden zunächst die erste Teilfläche 10.1 mit den Ablesemarken der Skala 17 und die Mittelfläche 10.2 erzeugt. Dabei werden die unterschiedlichen Skalenbereiche erst dann eingeblendet, wenn sie bereits von dem Zeiger überstrichen wurden. Dies bedeutet, dass die erste Teilfläche 10.1 mit den Ablesemarken der Skala 17 und die zweite Teilfläche 10.2 erst dann erscheinen, wenn der entsprechende Skalenbereich überstrichen wurde.

Hat der Zeiger 11.1 die Endlage erreicht, wird die gesamte Fläche des Anzeigeelements 10 angezeigt. Dabei ist zu beachten, dass die Ablesemarken der Skalen 17 noch ohne Beschriftung sind. Die erste Bewegung des Zeigers 11.1 ist dabei in den Figuren 12a und 12b verdeutlicht.

Hat der Zeiger 11.1 die Endlage erreicht, wird er wieder zurück in die Ausgangslage bewegt. Dabei wird während dieser zweiten Bewegung die Skalenbeschriftung eingeblendet. Die Skalenbeschriftung wird dann eingeblendet, wenn der Zeiger 11.1 bei der Rückbewegung den Skalenteil überstreicht, dem die entsprechende Beschriftung zugeordnet ist. Da sich der Zeiger 11.1 bei der Rückbewegung von der Endlage, also von der Endlage der Ablesemarke zur Ausgangslage zurückbewegt, werden zunächst die Ablesemarken beschriftet, welche an dem oberen Teil der Skala liegen, also hohe Geschwindigkeiten und hohe Motordrehzahlen.

Wird wiederum ein Signal erfasst, welches signalisiert, dass die Anzeigeeinrichtung ausgeschaltet werden soll, läuft das erläuterte Verfahren in umgekehrter Richtung ab.

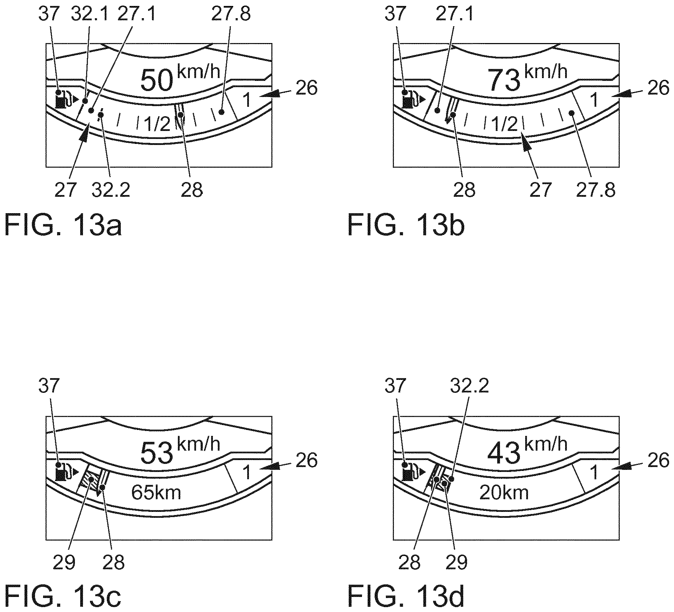

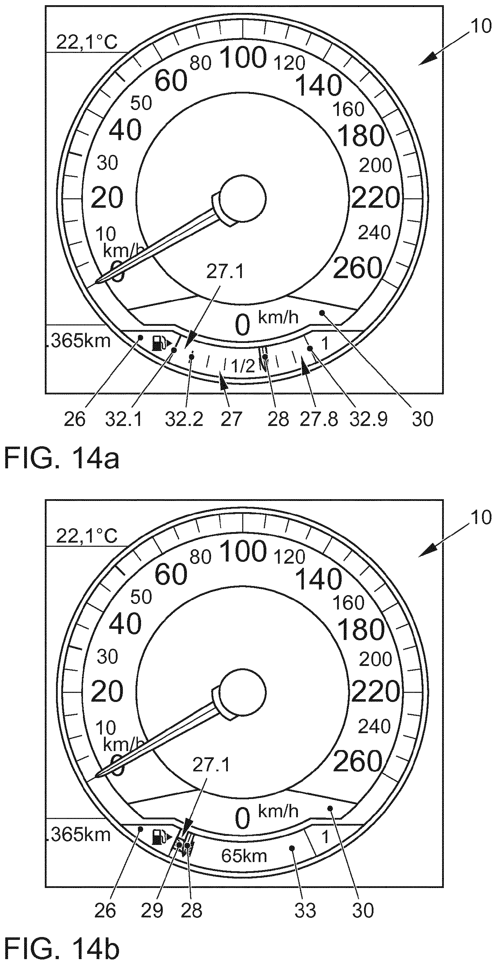

Mit Bezug zu den Figuren 13a bis 13d und 14a und 14b wird ein weiteres Ausführungsbeispiel eines erfindungsgemäßen Verfahrens erläutert.

Auf der Anzeigefläche 7 befindet sich ein Bereich 26, in welchem eine Anzeige für den Energievorrat, welcher noch in einem Energiespeicher gespeichert ist, dargestellt wird. Auf der Energievorratsanzeige wird ständig der momentane Energievorrat angezeigt. Dazu wird dieser mittels eines Sensors zu jedem Zeitpunkt während des Fahrzeugbetriebs ermittelt. Der Sensor übermittelt den ermittelten Wert an die Steuereinrichtung 4. Diese wiederum erzeugt dann die auf der Anzeigefläche 7 angezeigte Anzeige in dem Bereich 26, wie sie in Figur 13a gezeigt ist.

Die Energievorratsanzeige umfasst eine Skala 27. Die Skala 27 zeigt mögliche Werte der Energiemenge, welche sich im Energievorratsspeicher befindet, an. Dabei bezeichnet die "1" einen vollen Energievorratsspeicher und die "1/2" einen zur Hälfte gefüllten Energievorratsspeicher. Die Skala 27 ist in mehrere Skalenteile 27.1 bis 27.8 unterteilt. Im vorliegenden Beispiel umfasst die Skala neun Skalenstriche 32.1 bis 32.9. Zwischen jeweils zwei Skalenstrichen 32.1 bis 32.9 befindet sich jeweils ein Skalenteil 27.1 bis 27.8. Über das graphische Element 28 wird der ermittelte momentane Wert auf der Skala 27 angezeigt. Dabei ist das graphische Element 28 als Zeiger ausgestaltet, dessen Spitze auf den ermittelten momentanen Wert zeigt. Der Zeiger 28 wird beispielsweise in der Farbe rot dargestellt.

Links neben der Skala 27 wird ein graphisches Objekt 37 angezeigt, welches darstellt, dass es sich bei der in dem Bereich 26 angezeigten Skala 27 um die Energievorratsanzeige handelt.

In dem Datenspeicher 5 ist ein vordefinierter kritischer Wert für den Energievorrat abgelegt. Dieser liegt im vorliegenden Fall bei dem Wert, der einer Befüllung des Energievorratsspeicher bei dem zweiten Skalenstrich 32.2 entspricht. Der vordefinierte kritische Wert wird dabei in der Skala 27 bereits dadurch markiert, dass der Skalenstrich 32.2 in einen anderen Farbe als die restlichen Skalenstriche, beispielsweise in rot, dargestellt wird. Erreicht das graphische Element 28 den Skalenstrich 32.2, ist der Tank nur noch zu einem Achtel befüllt. Ein kritischer Wert des Energievorrats ist dabei als der Wert definiert, bei dem der Nutzer ein Befüllen des Energievorrats in Erwägung ziehen sollte.

Wird der kritische Wert für den Energievorrat unterschritten, wird die Anzeige in dem Bereich 26 auf der Anzeigefläche 7 verändert.

Überstreicht der Zeiger 28 den zweiten Skalenstrich 32.2 in Richtung des Skalenstrichs 32.1, wie in Figur 13c gezeigt, wird in dem Skalenteil 27.1, welches zwischen den Skalenstrichen 32.1 und 32.2 angeordnet ist, ein längliches graphisches Objekt 29 angezeigt. Dadurch wird der Skalenteil 27.1 markiert dargestellt. Der Skalenteil 27.1 stellt dabei einen kritischen Wertebereich der Energiemenge dar. Das längliche graphische Objekt 29 kann dabei die Länge des Skalenteils 27.1 aufweisen. Zudem kann die Farbe des graphischen Objekts 37 verändert werden.

Die restlichen Skalenstriche 32.3 bis 32.9 und somit auch die Skalenteile 27.2 bis 27.8 werden dann nicht mehr angezeigt. Neben dem markiert dargestellten Skalenteil 27.1 wird dann eine freie Fläche 33 dargestellt. Um das längliche Objekt 29 hervorzuheben und damit deutlich sichtbar darzustellen, kann es eine Warnfarbe, insbesondere die Farbe rot, aufweisen.

Weist das längliche graphische Objekt 29 die Farbe rot auf, ist der Zeiger, der auch die Farbe rot aufweist, nicht mehr deutlich in dem Skalenteil 27.1 wahrzunehmen. Der Zeiger 28 wird dann auch in einer anderen Farbe, insbesondere einer Farbe, die sich deutlich von der Farbe des kritischen Wertebereichs unterschiedet, angezeigt. Es ist also nicht nur der Zeiger 28 deutlich wahrzunehmen. Wechseln mehrere graphische Elemente auf der Anzeigefläche 7 ihre Farbe, kann der Wechsel der Anzeige deutlicher wahrgenommen werden.

In der freien Fläche 33 kann zudem die Restreichweite, welche mit der noch im Energievorrat gespeicherten Energiemenge erreichbar ist, angezeigt werden. Diese wird, wenn der kritische Wert unterschritten wird, von der Ermittlungseinheit 31 berechnet. Dabei ist zu beachten, dass die Restreichweite des Fahrzeugs 1 nicht alleine von der noch vorrätigen Energiemenge abhängig ist. Vielmehr ist die Restreichweite auch von der momentanen Fahrweise und den Einstellungen von Fahrzeugfunktionen, insbesondere einer Klimafunktion abhängig. So kann der kritische Wert immer als der Wert definiert werden, den der Energievorrat besitzt, wenn der zweite Skalenstrich 32.2 in Richtung des Skalenstriches 32.1 überstrichen wird. Die Restreichweite, die dann angezeigt wird, kann jedoch je nach Fahrweise und Fahrzeugeinstellungen unterschiedlich sein.

Beispielsweise beträgt die Restreichweite 65 km, wenn der kritische Wert unterschritten wird.

Fährt der Fahrer weiter, ohne den Energievorrat des Fahrzeugs 1 aufzufüllen, so sinkt die in dem Energievorrat gespeicherte Energiemenge weiter.

Unterschreitet die Energiemenge einen weiteren vordefinierten kritischen Wert innerhalb des kritischen Wertebereichs, fängt das längliche graphische Objekt 28 an zu pulsieren. Die Leuchtstärke des länglichen graphischen Objekts 28 wird also zeitlich verändert. Dadurch wird dem Nutzer signalisiert, dass er den Energievorrat nun dringend auffüllen muss.

Der zweite kritische Wert kann beispielsweise dann unterschritten werden, wenn der Energievorrat nur noch ein Viertel der Länge des länglichen graphischen Objekts 29 beträgt. Die Restreichweite kann dann beispielsweise bei 20 km liegen, wie in Figur 13d gezeigt.

Der Bereich 26 kann insbesondere eine herkömmliche Tankanzeige darstellen. Der Energievorrat kann beispielsweise in einem normalen Tank für Benzin oder Diesel gespeichert sein. Alternativ kann der Energievorrat auch in einer Traktionsbatterie, die für den Antrieb des Fahrzeugs 1 verantwortlich ist, gespeichert sein.

Der Bereich 26, in dem der Energievorrat angezeigt wird, kann auch in ein Anzeigeelement 10 integriert sein, wie es mit Bezug zu den Figuren 3a und 3b erläutert ist. Die Tankanzeige kann beispielsweise in das Anzeigeelement 10, welches die Geschwindigkeitsanzeige bereitstellt integriert sein. Dieses Anzeigeelement 10 weist neben einer Anzeige der Geschwindigkeit auf der Skala 17 noch eine numerische Geschwindigkeitsanzeige 30 auf. Unterhalb dieser numerischen Geschwindigkeitsanzeige 30 ist der Bereich 26 angeordnet. Die Integration des Bereichs 26 in ein solches Anzeigeelement 10 ist dabei in den Figuren 14a und 14b gezeigt.

Zudem kann ein Anzeigeelement 10 mit integrierter Tankanzeige auf einer Anzeigefläche 7 angezeigt werden, die in die drei Anzeigebereiche 8.1 bis 8.3 unterteilt ist. Auf der Anzeigefläche 7 kann dann zusätzlich in einem weiteren Bereich eine Fläche angezeigt werden, deren Leuchtstärke zeitlich verändert wird, wenn der kritische Wert oder der weitere kritische Wert unterschritten ist. Diese Fläche kann insbesondere beabstandet zu dem Bereich 26 angezeigt werden. Der Fahrer kann dann leichter darauf aufmerksam gemacht werden, dass der Energievorrat einen kritischen Wert unterschritten hat, wenn sein Blick gerade nicht auf den Teil der Anzeigefläche 7 fällt, in dem der Bereich 26 angeordnet ist.

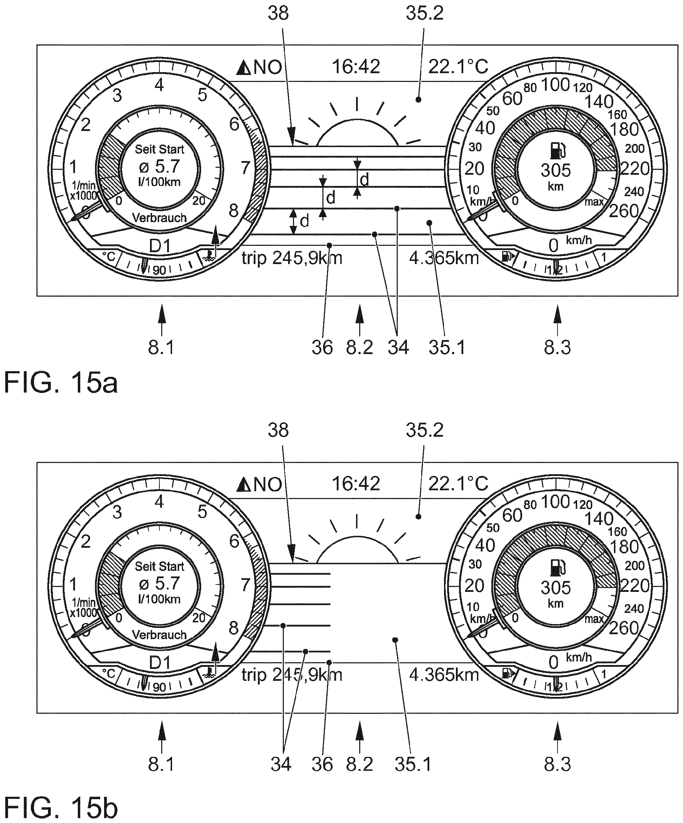

Mit Bezug zu den Figuren 15a bis 15c wird ein weiteres Ausführungsbeispiel eines erfindungsgemäßen Verfahrens erläutert.

Dabei beziehen sich die Figuren 15a bis 15c insbesondere auf Anzeigen, wie sie während des Verfahrens in dem zweiten Anzeigebereich 8.2 auf der Anzeigefläche 7 erzeugt werden können. Die Anzeige gemäß der Figuren 15a bis 15c ist jedoch auch auf jeder anderen Anzeigefläche erzeugbar und ist somit nicht auf die Anzeigefläche 7 der erfindungsgemäßen Vorrichtung 3 beschränkt.

Ausgangspunkt des Verfahrens ist, dass sich das Fahrzeug 1 im Parkmodus befindet, sich also nicht bewegt. Auf der Anzeigefläche 7 wird eine Anzeige, wie sie in Figur 15a gezeigt ist, erzeugt.

Auf der Anzeigefläche 7 ist dabei ein Bereich 35.1 angezeigt. Dieser Bereich 35.1 wird unten von einer ersten graphischen Begrenzung 36 und oben von einer zweiten graphischen Begrenzung 38, die auch als Horizont 38 bezeichnet wird, begrenzt. Der Bereich 35.1 befindet sich somit unterhalb des Horizonts 38. Der Horizont 38 stellt dabei eine graphische Abtrennung einer graphisch dargestellten Fahrbahn und eines graphisch dargestellten Himmels bereit. Der Bereich 35.1 unterhalb des Horizonts 38 stellt dabei die graphische Darstellung der Fahrbahn dar. Dabei muss die Fahrbahn nicht realitätsgetreu dargestellt werden. Der Bereich 35.2 oberhalb des Horizonts 38 stellt eine schematische Repräsentation des Himmels dar, welcher auch nicht realitätsgetreu dargestellt werden muss.

Weist das Fahrzeug 1 eine Funktion auf, mittels welcher das momentan vorherrschende Wetter ermittelbar ist, kann dies in dem Bereich 35.2 beispielsweise über Einfärbung des Bereichs 35.2 dargestellt werden.

In dem Bereich 35.1 unterhalb des Horizonts 38 werden mehrere voneinander beabstandete parallel zum Horizont 38 verlaufende horizontale Linien 34 angezeigt.

Setzt sich das Fahrzeug 1 in Bewegung, wird die Geschwindigkeit v_{F} des Fahrzeug 1 ermittelt. Diese wird in der Regel für eine allgemeine Geschwindigkeitsanzeige, beispielsweise wie sie im Anzeigeelement 10 des zweiten Anzeigebereichs 8.2 der Anzeigefläche 7 angezeigt wird, erfasst und kann ebenso für die Anzeige in dem Bereich 35.1 verwendet werden.

Aus der ermittelten Fahrzeuggeschwindigkeit v_{F} wird dann eine Geschwindigkeit v_{L} berechnet, mit welcher die horizontalen Linien 34 bewegt werden. Die Geschwindigkeit v_{L} der horizontalen Linien 34 ist beispielsweise proportional zur Fahrzeuggeschwindigkeit v_{F}. Beispielsweise kann die Geschwindigkeit v_{L} über den Zusammenhang v_{L} = α·v_{F} berechnet werden. Um zu vermeiden, dass bei hohen Fahrzeuggeschwindigkeiten v_{F} die horizontalen Linien 34 auf der Anzeigefläche 7 verwischen, soll die Geschwindigkeit v_{L} einen niedrigeren Wert als die Fahrzeuggeschwindigkeit v_{F} aufweisen. Die Proportionalitätskonstante α liegt also zwischen 0 und 1. Insbesondere ist die Proportionalitätskonstante α kleiner als 0,8. Die Proportionalitätskonstante α kann dabei über einen Algorithmus berechnet oder festgelegt werden.

Wird erfasst, dass sich das Fahrzeug 1 in Bewegung setzt, fangen die horizontalen Linien 34 an, sich über den Bereich 35.1 zu bewegen. Dabei bewegen sich die horizontalen Linien 34 von dem Horizont 38 weg nach unten in Richtung der dem Horizont 38 gegenüberliegenden ersten Begrenzung 36, welche den Bereich 35.1 nach unten abschließt. Hat eine horizontale Linie 34 die Begrenzung 36 erreicht, wird sie nicht mehr in dem Bereich 35.1 angezeigt. Gleichzeitig wird bei dem Horizont 38 eine neue horizontale Linie 34 angezeigt.

Dabei wird der Abstand d zwischen jeweils zwei benachbarten horizontalen Linien 34 in Bewegungsrichtung größer. Dadurch entsteht ein perspektivischer Eindruck, bei dem der Horizont 38 in der Ferne angezeigt wird. Durch die Bewegung der horizontalen Linien 34 und den immer größer werdenden Abstand d zwischen zwei horizontalen Linien 34 mit der Entfernung zum Horizont 38 erhält der Fahrer zudem den Eindruck, als würde er die horizontalen Linien 34 überfahren. Diese Anzeige erzeugt in dem Fahrzeug 1 ein besonderes Fahrgefühl.

Gewinnt das Fahrzeug 1 an Geschwindigkeit, wird gemäß des vorstehend angegebenen Zusammenhangs auch die Bewegung der Linien 34 schneller. Die gemessene Fahrzeuggeschwindigkeit v_{F} wird also direkt in die Geschwindigkeit v_{L} der Bewegung der horizontalen Linien 34 in dem Bereich 35.1 auf der Anzeigefläche 7 umgesetzt.

Die Bewegung der horizontalen Linien 34 auf der Anzeigefläche 7 ist insbesondere in Fahrsituationen von Vorteil, in denen der Fahrer nicht merkt, dass sich das Fahrzeug 1 bewegt. Dies kann beispielsweise dann der Fall sein, wenn das Fahrzeug 1 ein Automatikgetriebe aufweist. Fahrzeuge 1 mit Automatikgetriebe rollen bereits dann los, wenn der Fahrer den Fuß von dem Bremspedal nimmt bzw. nicht stark genug auf das Bremspedal drückt. Durch die Darstellung der horizontalen Linien 34 wird dem Fahrer visualisiert, dass er rollt. Durch die Anzeige kann der Fahrer vorteilhafterweise schneller darauf aufmerksam gemacht werden, dass er rollt.

Zudem kann von der Erfassungseinheit 6 ein Lenkwinkel des Lenkrads des Fahrzeugs 1 erfasst werden. Die Darstellung der horizontalen Linien 34 kann dann zudem in Abhängigkeit von dem Lenkwinkel erfolgen. Dabei wird der Lenkwinkel als Null definiert, wenn die Fahrzeugräder eine Geradeausstellung einnehmen. Bei einem negativen Lenkwinkel fährt das Fahrzeug 1 dann eine Linkskurve und bei einem positiven Lenkwinkel eine Rechtskurve.

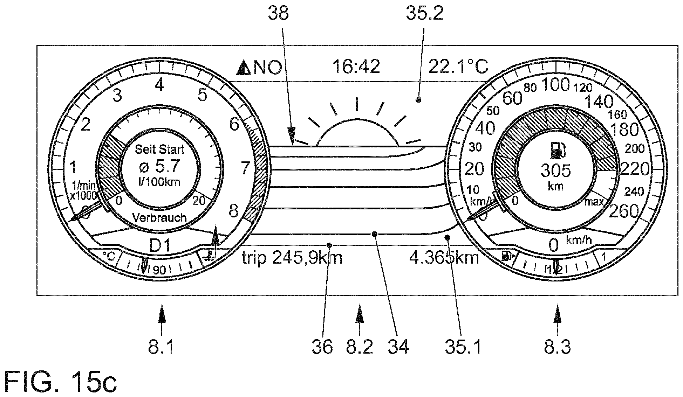

Die in Abhängigkeit von dem Lenkwinkel auf der Anzeigefläche 7 erzeugte Anzeige wird mit Bezug zu den Figuren 15b und 15c am Beispiel einer Linkskurve erläutert.

Wird ein negativer Lenkwinkel erfasst, werden die horizontalen Linien 34 in Abhängigkeit von der Größe des Lenkwinkels nach links verkürzt. Dies ist in Figur 15b gezeigt. Dabei werden die horizontalen Linien 34 umso kürzer dargestellt, je größer der Lenkwinkel ist. Bei einer Rechtskurve werden die horizontalen Linien 34 entsprechend nach rechts verkürzt.

Alternativ können die horizontalen Linien 34 auch in ihrem Verlauf verändert werden, wie es in Fig. 15c gezeigt ist. Bei einem negativen Lenkwinkel können die horizontalen Linien 34 eine Linkskrümmung erhalten, wobei die Stärke der Krümmung abhängig ist von der Größe des Lenkwinkels. Bei einer Rechtkurve werden die horizontalen Linien 34 entsprechend nach rechts gekrümmt dargestellt.

Bei starken Kurven verliert der Fahrer schnell den Überblick über den tatsächlichen Stand der Fahrzeugräder. Zwar kann sich das Lenkrad in einer vermeintlichen Geradeausstellung befinden, dies bedeutet jedoch nicht, dass die Fahrzeugräder auch tatsächlich geradeaus gerichtet sind. Durch die Darstellung des Lenkwinkels anhand einer graphischen Veränderung der horizontalen Linien 34, wird dem Fahrer verdeutlicht, ob sich die Räder des Fahrzeugs 1 in einer Geradeausstellung befinden oder nicht. Zudem wird wiederum ein besonderes Fahrgefühl innerhalb des Fahrzeugs 1 erzeugt.

Legt der Fahrer den Rückwärtsgang ein und fährt rückwärts, wird die Bewegungsrichtung der horizontalen Linien 34 umgekehrt. Die horizontalen Linien 34 bewegen sich dann von der ersten Begrenzung 36 in Richtung des Horizonts 38, d. h. der zweiten Begrenzung. Verschwindet eine horizontale Linie 34 am Horizont 38, wird eine neue horizontale Linie 34 bei der ersten Begrenzung 36 angezeigt. Zudem kann der Abstand d zwischen den Linien dann in Richtung des Horizonts 38 zunehmen.

Es wird also die Bewegungsrichtung des Fahrzeugs 1 mittels der Erfassungseinheit 6 erfasst, wobei die Bewegungsrichtung der horizontalen Linien 34 dann in Abhängigkeit von der Bewegungsrichtung des Fahrzeugs 1 bestimmt wird.

Die in der detaillierten Beschreibung beschriebenen Ausgestaltungen der Verfahren sind nicht auf eine Anzeigefläche 7 mit drei Anzeigebereichen 8.1 bis 8.3 beschränkt. Vielmehr kann jede Anzeige auch alleine auf einer beliebigen Anzeigefläche oder in Kombination mit beliebigen anderen Anzeigen angezeigt werden.

### Bezugszeichenliste

- 1: Fahrzeug
- 2: Anzeigeeinrichtung
- 3: Vorrichtung
- 4: Steuereinrichtung
- 5: Datenspeicher
- 6: Erfassungseinheit
- 7: Anzeigefläche
- 8.1 - 8.3: erster bis dritter Anzeigebereich
- 9: Bedieneinheit
- 10: Anzeigeelement
- 10.1 - 10.3: Teilflächen des Anzeigeelements im ersten Anzeigemodus
- 10.1': Außenring
- 10.2': Mittelring
- 10.3': innere Kreisscheibe
- 11.1: Zeiger
- 11.2: Zeigerbasis
- 12.1: kreisförmige Begrenzung
- 12.2: kreisförmige Begrenzung
- 12.3: kreisförmige Begrenzung
- 13, 13.1, 13.2: längliche Elemente
- 14.1, 14.2: graphische Elemente
- 15: ringsegmentförmiges Element
- 16: Ego-Fahrzeug
- 17: Skala
- 18: Bedienmenü
- 19: graphisches Objekt
- 20: geographische Karte
- 21: Markierung
- 22: Auswahlelement
- 23: Markierung
- 24: markierter Bereich
- 25: Kombinationsinstrument
- 26: Bereich für die Energievorratsanzeige
- 27: Skala
- 27.1 bis 27.8: Skalenteile
- 28: graphisches Element
- 29: graphisches Objekt
- 30: numerische Geschwindigkeitsanzeige
- 31: Ermittlungseinheit
- 32.1 bis 32.9: Skalenstriche
- 33: freie Fläche
- 34: graphische Elemente; horizontale Linien
- 35.1: Bereich
- 35.2: Bereich
- 36: erste Begrenzung
- 37: graphisches Objekt
- 38: zweite Begrenzung; Horizont
- L1: Bogenlänge
- L2: Ausgangslänge
- L3: Endlänge
- v_{F}: Fahrzeuggeschwindigkeit
- v_{L}: Geschwindigkeit der horizontalen Linien

## Patentansprüche

1. Verfahren zum Anzeigen eines kritischen Wertebereichs eines ersten fahrzeugspezifischen Parameters in einem Fahrzeug (1), bei dem
der momentane Wert des ersten Parameters ermittelt wird,
in einem Bereich (26) auf einer Anzeigefläche (7) zumindest eine Skala (27), welche mögliche Werte des ersten Parameters anzeigt und welche in mehrere Skalenteile (27.1 bis 27.8) unterteilt ist, und ein graphisches Element (28), welches den momentanen Wert des ersten Parameters auf der Skala (27) anzeigt, angezeigt werden, und,
wenn der erste Parameter einen vordefinierten kritischen Wert erreicht hat, der Bereich (26) der Anzeigefläche (7) derart angesteuert wird, dass zumindest ein Skalenteil (27.1) der Skala so verändert wird, dass das Skalenteil (27.1) zumindest teilweise als kritischer Wertebereich des ersten Parameters markiert angezeigt wird, wobei, wenn der erste Parameter den vordefinierten kritischen Wert erreicht hat, ein Wert eines zumindest teilweise von dem ersten Parameter abhängigen zweiten Parameters ermittelt und angezeigt wird,
**dadurch gekennzeichnet, dass**,
wenn der erste Parameter den vordefinierten kritischen Wert erreicht hat, die Skalenteile (27.2 bis 27.8), die nicht den kritischen Wertebereich bilden, nicht mehr angezeigt werden, wobei an deren Stelle neben dem markiert dargestellten Skalenteil (27.1) eine freie Fläche (33) dargestellt wird, in welcher der Wert des zweiten Parameters angezeigt wird.

2. Verfahren nach Anspruch 1,
**dadurch gekennzeichnet, dass**
der erste Parameter eine in einem Energiespeicher des Fahrzeugs (1) gespeicherte Energiemenge ist und der zweite Parameter eine Restreichweite des Fahrzeugs (1) ist.

3. Verfahren nach einem der vorhergehenden Ansprüche,
**dadurch gekennzeichnet, dass**
zum Anzeigen des kritischen Wertebereichs der vordefinierte kritische Wert unterschritten wird.

4. Verfahren nach einem der vorhergehenden Ansprüche,
**dadurch gekennzeichnet, dass**
der kritische Wertebereich durch ein längliches graphisches Objekt (29) markiert dargestellt wird, welches sich zumindest teilweise über das Skalenteil (27.1) erstreckt.

5. Verfahren nach Anspruch 4,
**dadurch gekennzeichnet, dass**,
wenn innerhalb des kritischen Wertebereichs ein weiterer vordefinierter kritischer Wert erreicht wird, eine visuell wahrnehmbare Eigenschaft des länglichen graphischen Objekts (29) verändert wird.

6. Verfahren nach einem der vorhergehenden Ansprüche,
**dadurch gekennzeichnet, dass**,
wenn der erste Parameter den vordefinierten kritischen Wert erreicht hat, eine visuell wahrnehmbare Eigenschaft des graphischen Elements (28) verändert wird.

7. Verfahren nach Anspruch 5 oder 6,
**dadurch gekennzeichnet, dass**
die wahrnehmbare Eigenschaft des länglichen graphischen Objekts (29) und/oder des graphischen Elements (28) die Farbe, die Länge und/oder eine zeitliche Veränderung der Leuchtstärke des länglichen graphischen Objekts (29) und/oder des graphischen Elements (28) umfasst.

8. Verfahren nach einem der vorhergehenden Ansprüche,
**dadurch gekennzeichnet, dass**
der Bereich in einem Anzeigeelement (10) angezeigt wird, welches eine Anzeige für eine Geschwindigkeit und/oder eine Motordrehzahl des Fahrzeugs (1) darstellt.

9. Verfahren nach einem der vorhergehenden Ansprüche,
**dadurch gekennzeichnet, dass**,
wenn der Wert des Parameters den vordefinierten kritischen Wert erreicht, auf der Anzeigefläche (7) in einem weiteren Bereich eine Fläche angezeigt wird, deren Leuchtstärke zeitlich verändert wird.

10. Vorrichtung (3) zum Anzeigen eines kritischen Wertebereichs eines ersten fahrzeugspezifischen Parameters in einem Fahrzeug (1), mit
einer Anzeigeeinrichtung (2) mit einer Anzeigefläche (7),
einer Erfassungseinheit (6), mittels welcher der erste Parameter erfassbar ist, und
einer Steuereinrichtung (4), mittels welcher die Anzeigefläche (7) derart ansteuerbar ist, dass in einem Bereich auf der Anzeigefläche (7) zumindest eine Skala (27), welche mögliche Werte des ersten Parameters anzeigt und welche in mehrere Skalenteile (27.1 bis 27.8) unterteilbar ist, und ein graphisches Element (28), welches den momentanen Wert des ersten Parameters auf der Skala (27) anzeigt, anzeigbar sind, und, wenn der erste Parameter einen vordefinierten kritischen Wert erreicht, zumindest ein Skalenteil (27.1) der Skala (27) so veränderbar ist, dass das Skalenteil (27.1) zumindest teilweise als kritischer Wertebereich des ersten Parameters markiert angezeigt wird,
einer Ermittlungseinheit (31), die einen Wert eines von dem ersten Parameter zumindest teilweise abhängigen zweiten Parameters ermittelt,
**dadurch gekennzeichnet, dass**,
wenn der erste Parameter den vordefinierten kritischen Wert erreicht hat, die Skalenteile (27.2 bis 27.8), die nicht den kritischen Wertebereich bilden, nicht mehr angezeigt werden, wobei an deren Stelle neben dem markiert dargestellten Skalenteil (27.1) eine freie Fläche (33) dargestellt wird, in welcher der Wert des zweiten Parameters anzeigbar ist.

11. Vorrichtung (3) nach Anspruch 10 oder 11,
**dadurch gekennzeichnet, dass**
die Anzeigefläche (7) in zumindest drei Anzeigebereiche (8.1, 8.2, 8.3) aufteilbar ist, wobei in jeweils einem ersten und einem zweiten Anzeigebereich (8.1, 8.3) ein Anzeigeelement (10) mit dem Bereich (26) anzeigbar ist.

12. Kombinationsinstrument (25) in einem Fahrzeug (1) mit einer Vorrichtung (3) nach einem der Ansprüche 10 oder 11.

## Claims

1. Method for displaying a critical value range of a first vehicle-specific parameter in a vehicle (1), in which
the instantaneous value of the first parameter is determined,
at least one scale (27), which displays possible values of the first parameter and which is divided into a plurality of scale parts (27.1 to 27.8), and a graphical element (28), which displays the instantaneous value of the first parameter on the scale (27), are displayed in a region (26) on a display surface (7), and,
if the first parameter has reached a predefined critical value, the region (26) of the display surface (7) is actuated such that at least one scale part (27.1) of the scale is changed such that the scale part (27.1) is at least partly displayed in a manner marked as being a critical value range of the first parameter, wherein, if the first parameter has reached the predefined critical value, a value of a second parameter, which is at least partly dependent on the first parameter, is determined and displayed,
**characterized in that**,
if the first parameter has reached the predefined critical value, the scale parts (27.2 to 27.8) that do not form the critical value range are no longer displayed, wherein, in their position next to the scale part (27.1) depicted in marked form, a free surface (33) is depicted in which the value of the second parameter is displayed.

2. Method according to Claim 1,
**characterized in that**
the first parameter is an amount of energy stored in an energy store of the vehicle (1) and the second parameter is a remaining range of the vehicle (1).

3. Method according to either of the preceding claims,
**characterized in that**,
for the critical value range to be displayed, the predefined critical value is undershot.

4. Method according to one of the preceding claims,
**characterized in that**
the critical value range is depicted as being marked by an elongate graphical object (29) that extends at least partly over the scale part (27.1).

5. Method according to Claim 4,
**characterized in that**,
if a further predefined critical value within the critical value range is reached, a visually perceptible property of the elongate graphical object (29) is changed.

6. Method according to one of the preceding claims,
**characterized in that**,
if the first parameter has reached the predefined critical value, a visually perceptible property of the graphical element (28) is changed.

7. Method according to Claim 5 or 6,
**characterized in that**
the perceptible property of the elongate graphical object (29) and/or of the graphical element (28) comprises the colour, the length and/or a change over time in the luminosity of the elongate graphical object (29) and/or of the graphical element (28).

8. Method according to one of the preceding claims,
**characterized in that**
the region is displayed in a display element (10) that depicts a display of a speed and/or an engine speed of the vehicle (1).

9. Method according to one of the preceding claims,
**characterized in that**,
if the value of the parameter reaches the predefined critical value, a surface whose luminosity is changed over time is displayed on the display surface (7) in a further region.

10. Device (3) for displaying a critical value range of a first vehicle-specific parameter in a vehicle (1), having
a display apparatus (2) having a display surface (7), a detection unit (6) by way of which the first parameter is able to be detected, and
a control apparatus (4) by way of which the display surface (7) is able to be actuated such that at least one scale (27), which displays possible values of the first parameter and which is able to be divided into a plurality of scale parts (27.1 to 27.8), and a graphical element (28), which displays the instantaneous value of the first parameter on the scale (27), are able to be displayed in a region on the display surface (7), and, if the first parameter reaches a predefined critical value, at least one scale part (27.1) of the scale (27) is able to be changed such that the scale part (27.1) is at least partly displayed in a manner marked as being a critical value range of the first parameter,
a determination unit (31) that determines a value of a second parameter, which is at least partly dependent on the first parameter,
**characterized in that**,
if the first parameter has reached the predefined critical value, the scale parts (27.2 to 27.8) that do not form the critical value range are no longer displayed, wherein, in their position next to the scale part (27.1) depicted in marked form, a free surface (33) is depicted in which the value of the second parameter is able to be displayed.

11. Device (3) according to Claim 10 or 11,
**characterized in that**
the display surface (7) is able to be divided into at least three display regions (8.1, 8.2, 8.3), wherein a display element (10) containing the region (26) is able to be displayed in each case in a first and a second display region (8.1, 8.3).

12. Combination instrument (25) in a vehicle (1) having a device (3) according to either of Claims 10 and 11.

## Revendications

1. Procédé d'affichage d'une plage de valeurs critiques d'un premier paramètre spécifique au véhicule dans un véhicule (1), avec lequel
la valeur momentanée du premier paramètre est déterminée, au moins une graduation (27), laquelle affiche les valeurs possibles du premier paramètre et laquelle est divisée en plusieurs parties de graduation (27.1 à 27.8), et un élément graphique (28), lequel affiche la valeur momentanée du premier paramètre sur la graduation (27), étant affichés dans une zone (26) sur une surface d'affichage (7), et
lorsque le premier paramètre a atteint une valeur critique prédéfinie, la zone (26) de la surface d'affichage (7) est commandée de telle sorte qu'au moins une partie de graduation (27.1) de la graduation est modifiée de telle manière que la partie de graduation (27.1) est affichée en étant marquée au moins partiellement en tant que plage de valeurs critiques du premier paramètre, une valeur d'un deuxième paramètre dépendant au moins partiellement du premier paramètre étant déterminée et affichée lorsque le premier paramètre a atteint la valeur critique prédéfinie,
**caractérisé en ce que**
lorsque le premier paramètre a atteint la valeur critique prédéfinie, les parties de graduation (27.2 à 27.8) qui ne forment pas la plage de valeurs critiques ne sont plus affichées, une surface libre (33) dans laquelle est affichée la valeur du deuxième paramètre étant représentée à leur place à côté de la partie de graduation (27.1) représentée marquée.

2. Procédé selon la revendication 1, **caractérisé en ce que** le premier paramètre est une quantité d'énergie accumulée dans un accumulateur d'énergie du véhicule (1) et le deuxième paramètre est une autonomie de déplacement restante du véhicule (1).

3. Procédé selon l'une des revendications précédentes, **caractérisé en ce que** pour l'affichage de la plage de valeurs critiques, la valeur critique prédéfinie est franchie vers le bas.

4. Procédé selon l'une des revendications précédentes, **caractérisé en ce que** la plage de valeurs critiques est représentée marquée par un objet graphique allongé (29) qui s'étend au moins partiellement au-dessus de la partie de graduation (27.1).

5. Procédé selon la revendication 4, **caractérisé en ce que** lorsqu'une valeur critique prédéfinie supplémentaire est atteinte à l'intérieur de la plage de valeurs critiques, une propriété visuellement perceptible de l'objet graphique allongé (29) est modifiée.

6. Procédé selon l'une des revendications précédentes, **caractérisé en ce que** lorsque le premier paramètre a atteint la valeur critique prédéfinie, une propriété visuellement perceptible de l'élément graphique (28) est modifiée.

7. Procédé selon la revendication 5 ou 6, **caractérisé en ce que** la propriété visuellement perceptible de l'objet graphique allongé (29) et/ou de l'élément graphique (28) comprend la couleur, la longueur et/ou une variation dans le temps de l'intensité lumineuse de l'objet graphique allongé (29) et/ou de l'élément graphique (28).

8. Procédé selon l'une des revendications précédentes, **caractérisé en ce que** la zone est affichée dans un élément d'affichage (10) qui représente une indication pour une vitesse et/ou un régime du moteur du véhicule (1).

9. Procédé selon l'une des revendications précédentes, **caractérisé en ce que** lorsque la valeur du paramètre atteint la valeur critique prédéfinie, une surface dont l'intensité lumineuse est modifiée dans le temps est affichée sur la surface d'affichage (7) dans une zone supplémentaire.

10. Arrangement (3) pour afficher une plage de valeurs critiques d'un premier paramètre spécifique au véhicule dans un véhicule (1), comprenant un dispositif d'affichage (2) pourvu d'une surface d'affichage (7),
une unité d'acquisition (6) au moyen de laquelle peut être acquis le premier paramètre, et
un dispositif de commande (4) au moyen duquel la surface d'affichage (7) peut être pilotée de telle sorte qu'au moins une graduation (27), laquelle affiche les valeurs possibles du premier paramètre et laquelle est divisée en plusieurs parties de graduation (27.1 à 27.8), et un élément graphique (28), lequel affiche la valeur momentanée du premier paramètre sur la graduation (27), peuvent être affichés dans une zone sur la surface d'affichage (7), et, lorsque le premier paramètre atteint une valeur critique prédéfinie, au moins une partie de graduation (27.1) de la graduation (27) peut être modifiée de telle sorte que la partie de graduation (27.1) est affichée en étant marquée au moins partiellement en tant que plage de valeurs critiques du premier paramètre,
une unité de détermination (31) qui détermine une valeur d'un deuxième paramètre dépendant au moins partiellement du premier paramètre,
**caractérisé en ce que**
lorsque le premier paramètre a atteint la valeur critique prédéfinie, les parties de graduation (27.2 à 27.8) qui ne forment pas la plage de valeurs critiques ne sont plus affichées, une surface libre (33) dans laquelle peut être affichée la valeur du deuxième paramètre étant représentée à leur place à côté de la partie de graduation (27.1) représentée marquée.

11. Arrangement (3) selon la revendication 10 ou 11, **caractérisé en ce que** la surface d'affichage (7) peut être divisée en au moins trois zones d'affichage (8.1, 8.2, 8.3), un élément d'affichage (10) avec la zone (26) pouvant être affiché respectivement dans une première et une deuxième zone d'affichage (8.1, 8.3).

12. Instrument combiné (25) dans un véhicule (1), comprenant un arrangement (3) selon l'une des revendications 10 ou 11.
